# EUROPEAN PATENT SPECIFICATION

(11) **EP 0 526 060 B1**
(45) Date of publication and mention of the grant of the patent: **23.10.1996**
(21) Application number: 92306586.6
(22) Date of filing: 17.07.1992
(51) Int. Cl.: H02K 15/00, H01R 39/14, H02K 15/02

(54) **Method for assembling armatures**
Verfahren zum Zusammenbau von Ankern
Méthode d'assemblage d'armatures

(30) Priority: 22.07.1991 US 734227
(43) Date of publication of application: 03.02.1993
(73) Proprietor: GENERAL ELECTRIC COMPANY, Schenectady, NY 12345 (US)
(72) Inventor: Ellis, Robert Eldon, Fort Wayne, Indiana 46835 (US); Brown, David Sheldon, Hendorsonville, Tennessee 37075 (US)
(74) Representative: Pratt, Richard Wilson

(56) References cited:
- US-A- 3 624 890
- US-A- 3 778 892
- US-A- 4 643 792
- PATENT ABSTRACTS OF JAPAN vol. 10, no. 386 (E-467)(2443) 24 December 1986 & JP- A-61 177 152

## Description

### FIELD OF THE INVENTION

This invention relates in general to dynamoelectric machines and in particular to a method of assembling an armature for use in a dynamoelectric machine.

### BACKGROUND OF THE INVENTION

In the past, various schemes employing different methods and apparatus were utilized in assembling the component parts of an armature for use in a dynamoelectric machine.

In one of the aforementioned past schemes, the component parts of the armature included a shaft having a pair of opposite shaft extensions, a core secured about the shaft intermediate the opposite shaft extensions, and a commutator. The commutator had a generally axial bore therethrough, and a plurality of winding connection tangs were generally radially spaced about the bore and extended in part generally radially outwardly of the commutator. The core included a generally circumferential surface interposed between a pair of generally opposite end faces, and a plurality of winding receiving slots were generally radially spaced in the core extending generally axially between the opposite end faces and intersecting the circumferential surface, respectively. The tangs on the commutator and the slots in the core were of equal number.

A plurality of fixtures for assembling the aforementioned component parts of the armature were provided on a rotatable table which was intermittently indexed or rotated through a plurality of work stations, and the fixtures were axially aligned with corresponding shaft receiving openings in the table, respectively. The fixtures each had a rotatable locating cup for the commutator, and the locating cup was axially aligned with the corresponding shaft receiving recess in the table. A generally radially extending knife arm was pivotably mounted to the locating cup, and a tang locating detent on the locating cup extended generally radially inwardly thereof.

A roller type application for a hardenable adhesive material and a finger type application for an activator utilized with the hardenable adhesive material were provided adjacent the rotatable table at a first or loading work station. An operator manually placed the commutator bore about the finger type applicator which coated the bore with the activator, and the operator then placed the commutator in the locating cup of the fixture at the first station. Upon the placement of the commutator in its locating cup, the commutator bore was axially aligned with the shaft locating recess in the table, and the detent on the locating cup was abutted between a pair of adjacent tangs on the commutator thereby to locate one of the tangs in radial alignment with the pivoted knife arm on the locating cup.

With the commutator so located in the locating cup of the fixture at the first work station, the operator then associated the core and shaft with the roller type applicator which applied the hardenable adhesive material about a preselected part on one of the opposite shaft extensions. The operator then removed the core and shaft from the roller type applicator and manually inserted the one opposite shaft extension through the bore of the commutator into locating engagement with shaft locating recess in the table aligned with the fixture. When the one opposite shaft extension was inserted into the locating engagement with the shaft locating recess in the table, the hardenable adhesive material on the aforementioned preselected part of the one opposite shaft extension was disposed within the commutator bore in communication with the activator coated thereon. Of course, when the commutator was located in the locating cup and the one opposite shaft extension was located in the shaft locating recess, the core and the commutator were arranged in preselected axial spaced relation.

Subsequent to the above discussed communication of the hardenable adhesive material and the activator, the operator applied a manual force onto the pivoted knife arm to effect the rotation of the locating cup in the fixture which conjointly rotated the commutator bore about the preselected part of the one opposite shaft extension located within the commutator bore, and such conjoint rotation of the commutator with the locating cup was effected to ensure the mixing of the communicated hardenable adhesive material and the activator. After the manual rotation of the locating cup, the operator manually effected the pivoted movement of the pivoted knife arm on the locating cup into locating engagement within one of the winding receiving slots of the core generally at the intersection of such slot with the circumferential surface on the core. The aforementioned locating engagement of the pivoted knife arm on the locating cup with the winding receiving slot in the core was effective to place the core slots and the commutator tangs respectively in axial alignment, and the aforementioned mixing of the hardenable adhesive material and the activator effected the hardening of the hardenable adhesive material in adhering relation between the commutator and the one opposite shaft extension. Thus, the hardening of the hardenable adhesive material not only maintained the aforementioned preselected axial spaced relation between the core and the commutator but also retained the axial alignment between the respective core slots and commutator tangs.

After the aforementioned manual pivoted movement of the pivoted knife arm into locating engagement with the core slot, a cap plate was arranged in locating engagement on the fixture, and the other of the opposite shaft extensions was received in axial locating engagement within another bore provided therefor in the cap plate. To complete the work at the first work station, the operator manually tightened a thumb screw carried in the cap plate into retaining engagement with a part of the other opposite shaft extension received in the bore of the cap plate.

After the completion of the work at the first work station, the table was successively intermittently rotated to index the fixture and the armature components assembled therein through a second or dummy work station, at least a third work station where heat was applied to cure the hardenable adhesive material, and an unloading work station.

### SUMMARY OF THE INVENTION

According to the present invention, a method of assembling an armature for use in a dynamoelectric machine, the armature including a commutator having a bore therethrough, and a core and shaft assembly with a core secured about a shaft intermediate a pair of generally axial opposite shaft extensions, a hardenable adhesive material, and an activator for the hardenable adhesive material, the method comprising the steps of:
coating at least a part of the commutator bore with the activator and locating the commutator in a preselected stationary position;
axially aligning one of the opposite shaft extensions with the commutator bore when the commutator is in its preselected stationary position and then applying the hardenable adhesive material generally about a preselected part of the one opposite shaft extension;
disposing the preselected part of the one opposite shaft extension at least in part within the commutator bore when the commutator is located in its preselected stationary position thereby to communicate the hardenable adhesive material with the activator and to arrange the core and the commutator in preselected axially spaced relation; and
rotating only the core and shaft assembly to arrange the core in a preselected rotated position with respect to the commutator in its pre-selected stationary position and ensuring the mixing of the activator and the hardenable adhesive material communicated during the disposing step in response to the rotating step.

According to the present invention, a method of assembling and armature for use in a dynamoelectric machine, the armature including a commutator having a generally axial bore therethrough, and a core and shaft assembly having a core secured about a shaft intermediate a pair of generally opposite shaft extensions, a hardenable adhesive material, and an activator for the hardenable adhesive material, the method comprising the steps of:
coating at least a part of the commutator bore with the activator and disposing the commutator in a preselected stationary position;
inserting one of the opposite shaft extensions in part generally axially through the commutator bore and rotating the core and shaft assembly into a preselected rotated position with respect to the commutator in its preselected stationary position;
removing the shaft from the bore of the commutator and applying the hardenable adhesive material generally about a preselected part on the one opposite shaft extension and axially moving the preselected part on the one opposite shaft extension at least in part within the commutator bore;
further rotating the core and shaft assembly from its preselected rotated position when the preselected part on the one opposite shaft extension is at least in part within the commutator bore and returning the core and shaft assembly into its preselected rotated position with respect to the commutator in its preselected stationary position; and
ensuring the mixing of the activator and the hardenable adhesive material effected during the axially moving step in response to the further rotating and return rotating steps.

### BRIEF DESCRIPTION OF THE DRAWINGS

FIG. 1 is an exploded perspective view showing a core and assembly and a commutator comprising an armature adapted for use in a dynamoelectric machine;
FIG. 2 is a schematic view showing apparatus in one form of the invention for assembling the armatures of FIG. 1 and illustrating principles which may be practiced in a method of operating such apparatus and a method of assembling an armature in one form of the invention, respectively;
FIG. 3 is a side elevational view showing one side of the apparatus of FIG. 2 with some components removed for drawing clarity;
FIG. 4 is side elevational view showing another side of the apparatus of FIG. 2 opposite the one side shown in FIG. 3 with some components removed for drawing clarity;
FIG. 5 is a sectional view taken along line 5--5 in FIG. 3;
FIG. 6 is a side elevational view of a fixture carried by an endless conveyor in the apparatus of FIG. 2 and illustrating the commutator of the armature in FIG. 1 associated with the fixture;
FIGS. 7 and 8 are respectively plan and front elevational views of the fixture in FIG. 6;
FIGS. 9 and 10 are respectively plan and front elevational views of a work station associated with the apparatus of FIG. 2 for applying a coating of an activator for a hardenable adhesive material in the bore of each commutator as it approaches the endless conveyor of the apparatus in FIG. 2;
FIG. 11 is a partial plan view of a work station for receiving the commutators from the work station of FIGS. 9 and 10 and for deforming a plurality of tangs on each commutator to ensure the proper radial spacings of the tangs;
FIG. 12 is a partial sectional view taken along line 12--12 in FIG. 11;
FIG. 13 is a partial side elevational view of the work station shown in FIG. 11;
FIG. 13A is a partial view taken from FIG. 13 and illustrating the gripping engagement of a pick-and-place device with a commutator at the work station;
FIG. 14 is a partial sectional view taken along line 14--14 in FIG. 13;
FIGS. 15 and 16 are sectional views taken along lines 15--15 and 16--16 in FIG. 3, respectively;
FIG. 17 is a side elevational view of a work station associated with the apparatus of FIG. 2 for deforming the tangs on each commutator to ensure proper angularity of such tangs;
FIGS. 18 and 19 are, respectively, partial left side and front elevational views of a work station in the apparatus of FIG. 2 for receiving a core and shaft assembly and for transferring it into assembly relation with a commutator located on the fixture shown in FIGS. 6-8;
FIG. 19A is a partial view taken from FIG. 19 and showing the core and shaft assembly located in a preselected rotated position on the fixture;
FIG. 20 is a partial sectional view showing a source of the core and shaft assemblies adjacent the work station illustrated in FIGS. 18 and 19;
FIG. 21 is a partial left side elevational view of the work station shown in FIGS. 18 and 19 illustrating a core and shaft assembly rotated into a preselected rotated position;
FIG. 22 is a left side elevational view of a pick-and-place device at the work station of FIG. 18 for transferring a core and shaft assembly from the source of FIG. 20 and placing it in a preselected position on the fixture;
FIGS. 23 and 24 are sectional views taken along lines 23--23 and 24--24 in FIG. 3, respectively;
FIG. 25 is a partial front elevational view of a work station in the apparatus of FIG. 2 for actuating a holding device on the fixture into displacement preventing engagement with the commutator to maintain its preselected position on the fixture;
FIG. 25A is a partial left side elevational view of the work station shown in FIG. 25;
FIG. 26 is a top elevational view of an intermediate work station in the apparatus of FIG. 2 for rotating the core and shaft assembly into a preselected rotated position with respect to the commutator in its preselected position in the fixture;
FIG. 26A is a partial left side elevational view of the intermediate work station shown in FIG. 26;
FIG. 27 is a left side elevational view of a work station in the apparatus of FIG. 2 to verify the preselected rotated position of the core and shaft assembly with respect to the preselected position of the commutator on the fixture;
FIG. 28 is a left side elevational view of a work station in the apparatus of FIG. 2 for dispensing a hardenable adhesive material on a preselected part of the shaft;
FIG. 29 is a partial plan view of the work station shown in FIG. 28 with components removed for drawing clarity;
FIG. 30 is a sectional view taken along line 30--30 in FIG. 3;
FIG. 31 is a left side elevational view of a pick-and-place device at the work station of FIG. 28 for manipulating the core and shaft assembly relative to the commutator in its preselected position on the fixture;
FIG. 31A is a partial view taken from FIG. 31 and showing the pick-and-place device in a raised position disassociated from the core and shaft assembly on the fixture;
FIGS. 32 and 33 are respectively front and left side elevational views of a work station in the apparatus of FIG. 2 for effecting the displacement of the holding device from the commutator on the fixture;
FIG. 34 is a left side elevational view of a rejection work station in the apparatus of FIG. 2 for removing improperly assembled armatures from the apparatus;
FIG. 34A is a partial view taken from FIG. 34;
FIG. 35 is an enlarged partial view taken from FIG. 34;
FIGS. 36 and 37 are sectional views taken along lines 36--36 and 37--37 in FIG. 3, respectively;
FIG. 38 is a left side elevational view of an unloading work station in the apparatus of FIG. 2 for unloading properly assembled armatures from the apparatus;
FIGS. 39 and 40 are sectional views taken along lines 39--39 and 40--40 in FIG. 3, respectively;
FIG. 41 is a left side elevational view of a sensing station subsequent to the unloading station of FIG. 38 in the apparatus of FIG. 2 for ensuring that no armature or component parts thereof remain on a fixture; and
FIG. 42 is a left side elevational view of a fixture cleansing station in the apparatus of FIG. 2.

Corresponding reference characters indicate corresponding parts throughout the several views of the drawings.

The exemplifications set out herein illustrate the preferred embodiment of the invention in one form thereof, and such exemplifications are not to be construed as limiting either the scope of the disclosure or the scope of the invention.

### DETAILED DESCRIPTION OF THE PREFERRED EMBODIMENT

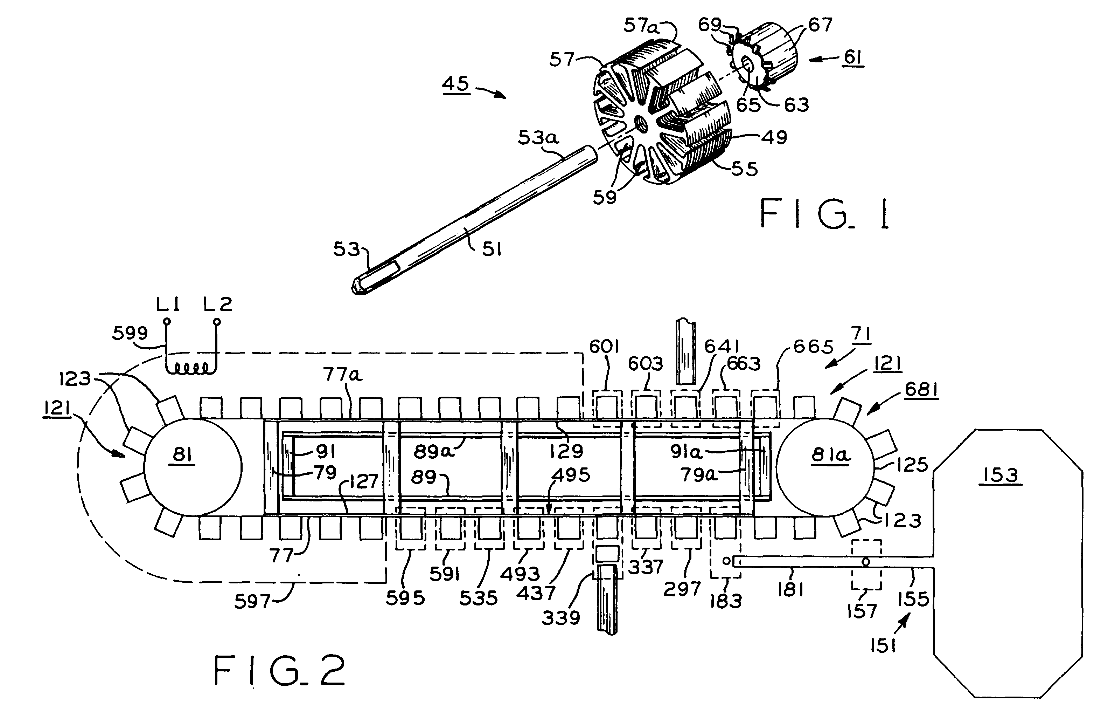

With reference to FIG. 1, an armature 45 for use in a dynamoelectric machine (not shown) is provided with a core and shaft assembly 47 having a core 49 formed of ferromagnetic material laminations arranged in stacked relation and secured about a shaft 51 intermediate a pair of generally axial opposite extensions 53, 53a of the shaft. A circumferential surface 55 on core 49 is interposed between a pair of generally opposite end faces 57, 57a thereof, and a plurality of radially spaced winding receiving slots 59 extend generally axially through the core intersecting both the circumferential surface and the opposite end faces, respectively.

Armature 51 is also provided with a commutator 61 having a generally cylindric body 63 formed of a dielectric material with a bore 65 extending generally axially therethrough. A plurality of electrically conductive, metallic brush riding segments 67 are electrically insulated from each other being carried by cylindric body 63 generally in radially spaced relation about the periphery thereof, and a plurality of deformable winding connectors or connector means, such as tabs or tangs 69 or the like for instance, are integrally provided on the segments so as to extend at a preselected angle therefrom, respectively. It may be noted that winding connection tangs 69 are equal in number to winding receiving slots 59 in core 49, and the winding connector tangs are radially spaced about commutator 61 so as to be axially alignable with the winding receiving slots in the core upon the assembly of armatures 45 by apparatus 71 of FIG. 2, as discussed in detail hereinafter.

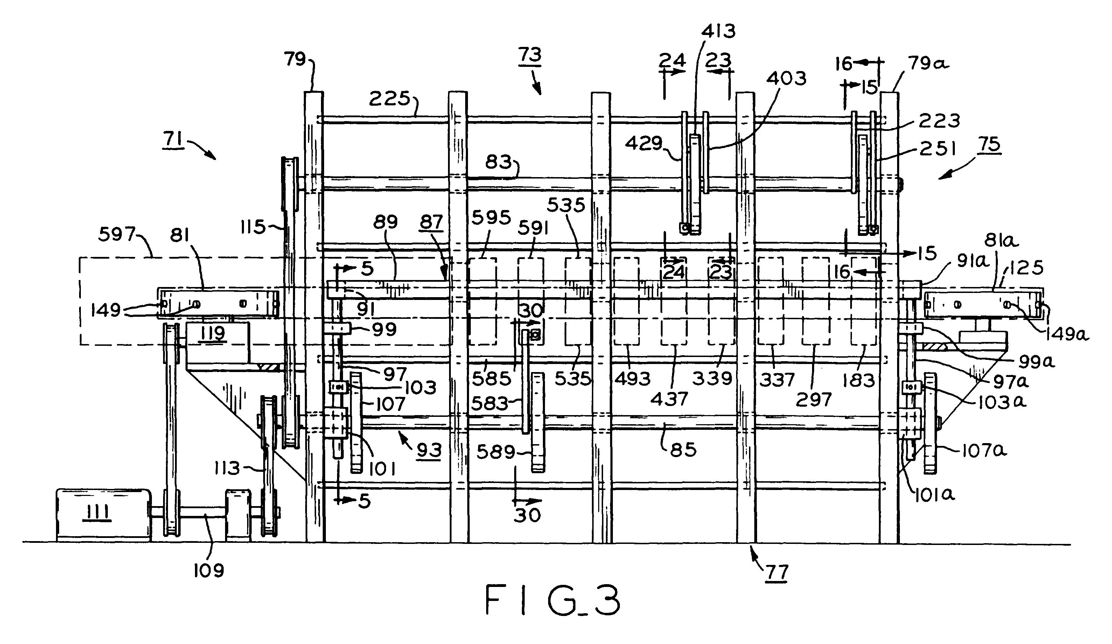

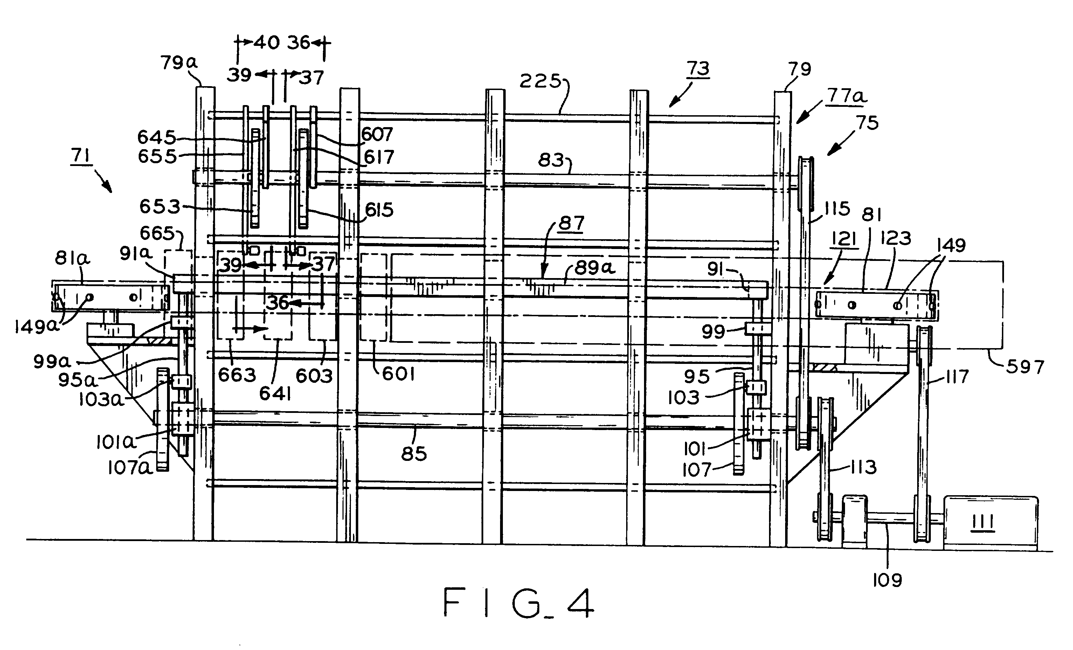

With reference also to FIGS. 3 and 4, apparatus 71 is provided with a plurality of interconnected structural members, indicated generally at 73, which define a stationary frame 75 having a pair of opposite sides 77, 77a interposed between a pair of opposite ends 79, 79a, and a pair of capstans 81, 81a are mounted to the opposite ends of the stationary frame, respectively. A pair of rotatable cam shafts extend generally lengthwise of apparatus 71 through opposite ends 79, 79a thereof, and the cam shafts are journaled by suitable means, such as for instance bearings (not shown) , associated with some of structural members 73, respectively,

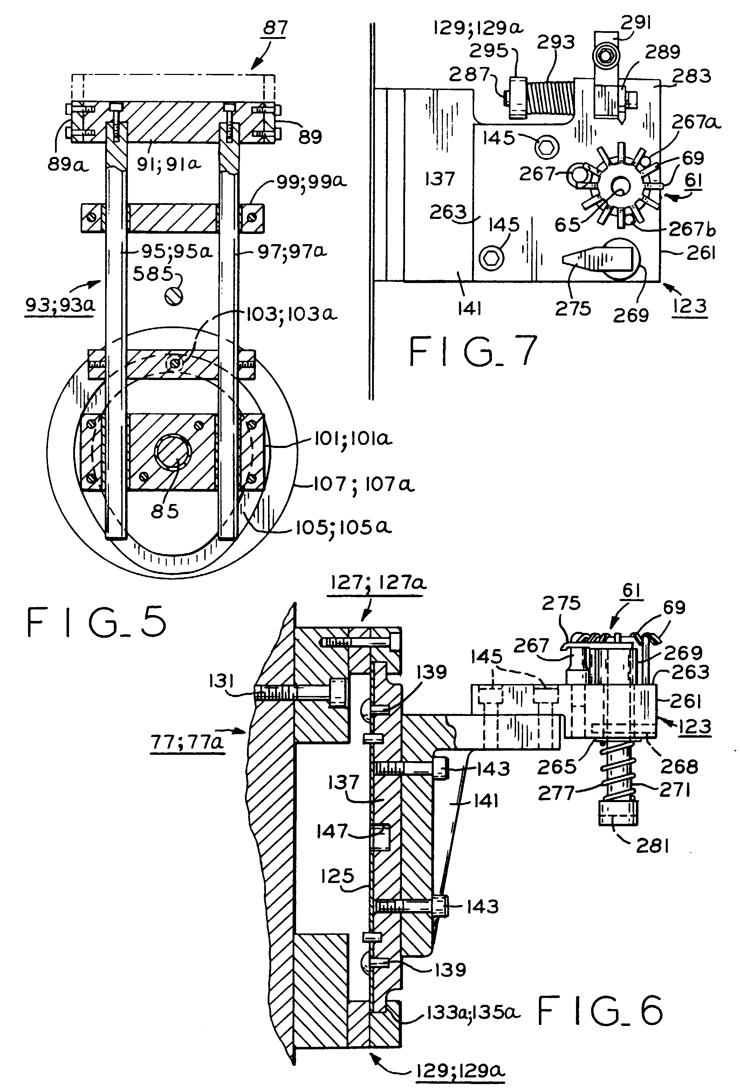

A reciprocally movable frame 87 associated with stationary frame 75 is provided with a pair of opposite side members 89, 89a interconnected between a pair of opposite end members 91, 91a, and the opposite side members and end members extend in spaced relation adjacent opposite sides 77, 77a and opposite ends 79, 79a of the stationary frame, respectively. Opposite end members 91, 91a are respectively supported on a pair of like cam followers 93, 93a, as seen in FIG. 5; however, while only cam follower 93 is shown in FIG. 5 for the sake of brevity of disclosure and drawing simplification, the subletter "a" designates the like component parts of cam follower 93a when referred to hereinafter. Cam followers 93, 93a are provided with a pair of spaced apart guide rods 95, 97 and 95a, 97a which are reciprocally movable or slidable in a pair of journaling supports 99, 101 and 99a, 101a secured to structural members 73 of stationary frame 75, and a roller 103, 103a interconnected between the guide rods is received in following engagement within a cam groove 105, 105a in a cam 107, 107a rotatably driven by lower cam shaft 85, respectively. Thus, upon the conjoint rotation of cam shaft 85 and cams 107, 107a, cam grooves 105, 105a drives rollers 103, 103a to impart reciprocal movement to guide rods 95, 97 and 95a, 97a which is translated to movable frame 87 moving it vertically between an at-rest or lowered position, as shown in solid lines in FIG. 5, and a displaced or raised position elevated with respect to stationary frame 75, as shown in phantom lines in FIG. 5.

With further reference to FIGS. 3 and 4, an output shaft 109 of an electric motor 111 is drivingly connected by a belt and pulley mechanism 113 to lower cam shaft 85 to effect its continuous rotation, and since cams 107, 107a are conjointly rotatable with the lower cam shaft, cam followers 93, 93a are operable to effect reciprocal vertical movement of movable frame 87 between its at-rest and displaced positions in the manner described above. Upper cam shaft 83 is conjointly rotatably driven from lower cam shaft 85 by another belt and pulley mechanism 115 interposed therebetween, and yet another belt and pulley mechanism 117 is drivingly interposed between output shaft 109 of electric motor 111 and a gear box 119. When driven by electric motor 111 through belt and pulley mechanism 117, it may be noted that gear box 119 is operable to effect the driven rotation of capstan 81 in successive discrete intermittent movements or rotations with a preselected dwell period between such discrete intermittent movements. While belt and pulley mechanisms 113, 115, 117 are illustrated herein for purposes of disclosure, it is contemplated that other drive devices may be associated between output shaft 109 of electric motor and both lower cam shaft 85 and gear box 119 and between upper and lower cam shafts 83, 85 within the scope of the invention.

As illustrated schematically in FIG. 2, apparatus 75 has an endless conveyor or conveyor means 121 which is operable generally in a predetermined course for successive discrete intermittent movements between a plurality of indexed positions defined in the predetermined course, and a plurality of like fixtures or fixture means 123 carried on an endless belt 125 of the endless conveyor through its predetermined course are illustrated in phantom lines at each indexed position of the endless conveyor, respectively. Thus, in the predetermined course of the endless conveyor 121, endless belt 125 is arranged to travel along opposite sides 77, 77a of stationary frame 75 and about a part of each capstan 81, 81a, and as further discussed hereinafter, capstan 81 is drivingly engaged with the endless belt while capstan 81a is an idler capsan. It may be noted that the previously discussed reciprocal movement of movable frame 87 occurs in a preselected time relation or sequence with the preselected dwell period of fixtures 123 in their respective indexed positions.

A pair of sets of opposed elongate guide tracks or guide means 127, 129 and 127a, 129a are respectively provided on apparatus 71 for guiding and displacement preventing engagement with endless belt 125, as shown in FIG. 6, and while the guide tracks extend lengthwise along opposite sides 77, 77a of stationary frame 75 between its opposite ends 79, 79a thereby to define in part the predetermined course of endless conveyor 121, such guide tracks are omitted from FIGS. 3 and 4 for the purpose of drawing clarity. Guide tracks 127, 129 and 127a, 129a are secured to opposite sides 77, 77a of stationary frame 75 by suitable means, such as for instance a plurality of machine screws 131 or the like, and a pair of sets of opposed grooves 133, 135 and 133a, 135a are respectively defined by the guide tracks in which endless belt 125 is slidably received.

As best seen in FIGS. 6 and 7, endless belt 125 is formed of a metallic strip material, such as for instance a stainless steel or the like, and a plurality of face plates 137 are respectively secured to the endless belt at the indexed positions of endless conveyor 121 by suitable means, such as for instance rivets 139 or the like; however, upper guide tracks 127, 127a have been omitted from FIG. 7 for the purpose of drawing clarity. A plurality of generally L-shaped mounting flanges 141 are respectively secured to face plates 137 by suitable means, such as for instance machine screws 143 or the like, and fixtures 123 are respectively mounted to the mounting flanges in spaced relation with the face plates by suitable means, such as for instance machine screws 145 or the like. It may be noted that an opening 147 is provided through endless belt 125 into each face plate 137 secured thereto, and such openings are predeterminately spaced apart along the endless belt. As shown in FIGS. 3 and 4, a plurality of generally radially extending drive plugs or extensions 149 are predeterminately radially spaced part about the circumference of drive capstan 81 for mating and driving engagement with openings 147 in endless belt 125, respectively. Of course, the respective driving engagements of drive plugs 149 on drive capstan 81 with openings 147 in endless belt 125 imparts to the endless belt the previously mentioned successive discrete intermittent movements with which capstan 81 is driven thereby to conjointly move fixtures 123 between the indexed positions of the endless belt with a predetermined dwell period at each indexed position. A like plurality of generally radially extending plugs or extensions 149a are also predeterminately radially spaced apart about the circumference of idler captsan 81a for respective locating and guiding engagements with openings 147 in endless belt 125 as it is driven through its predetermined course by drive capstan 81, as discussed above.

Associated with endless conveyor 121 is a source or supply 151 of commutators 61, as shown schematically in FIG. 2, and the commutator source includes a vibration mechanism 153 of a type well known to the art which selectively orients each commutator and delivers it in a preselected orientation into a guide ramp 155 associated with the vibration mechanism. Vibration mechanism 153 and its associated guide ramp 155 are available from Vibromatic Co. Inc., Noblesville, Indiana. As commutators 61 are so delivered from mechanism 153 in single file or line formation into guide ramp 155, the commutators advance toward a work station 157 spaced adjacent endless conveyor 121 for applying an activator (not shown) for a hardenable adhesive material into bore 65 of each commutator. The activator may be a Dymax 535 activator available from the Dymax Co. Inc., Chicago, Illinois, and as discussed hereinafter, the hardenable adhesive material may be a Dymax 20012 revision A adhesive also available from the aforementioned Dymax Co. Inc.

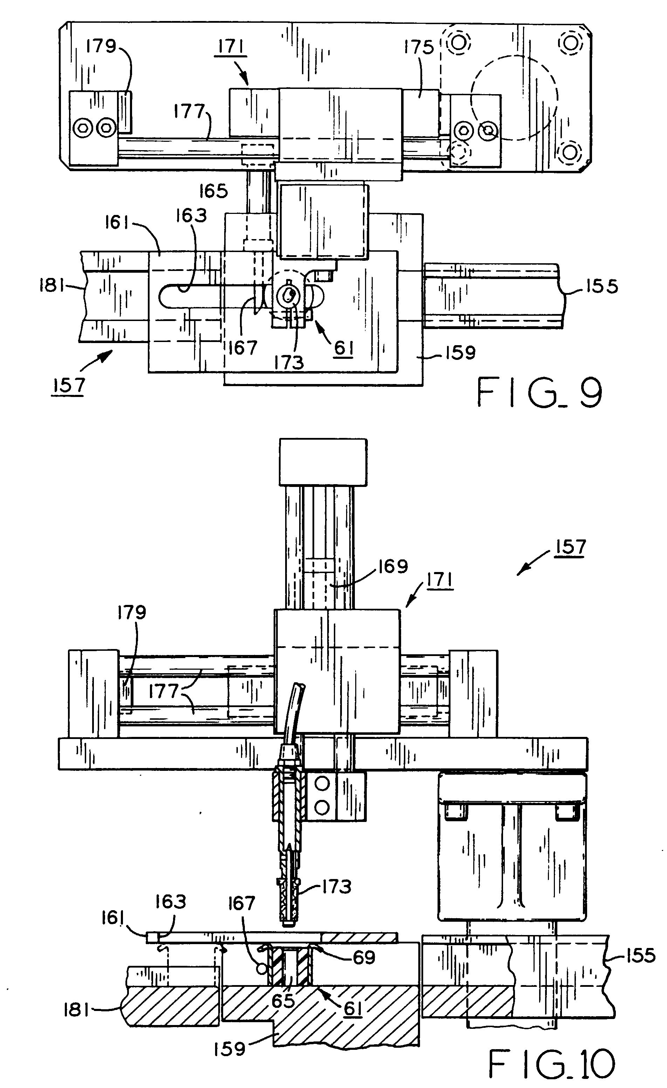

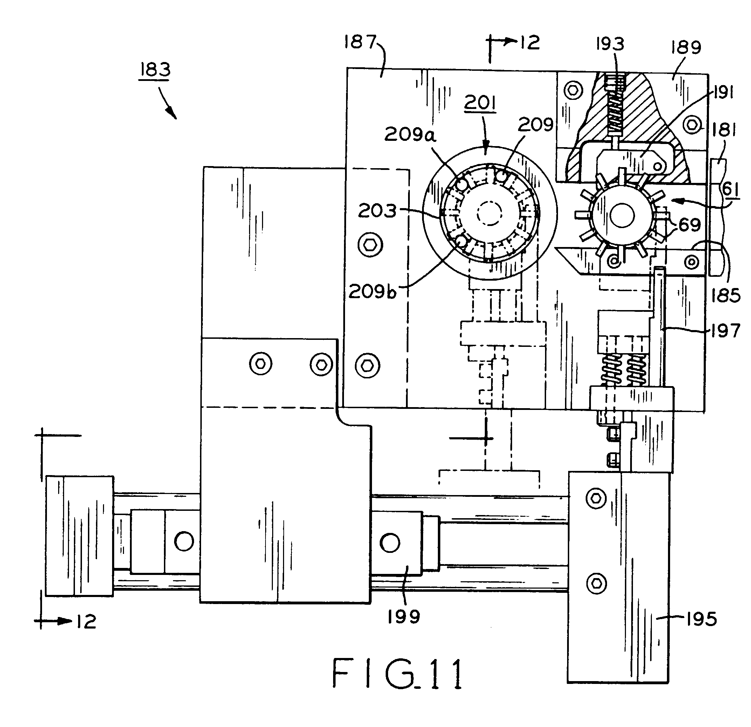

At work station 157, as seen in FIGS. 9 and 10, each commutator 61 is received from guide ramp 155 in single file formation within a guide block 159 aligned with the guide ramp, and when within the guide block, each commutator is located in a preselected position in the guide block beneath a guide plate 161 having an elongate slot 163 therein and fixedly secured to the guide plate by suitable means (not shown). When each commutator 61 is in its preselected position in guide block 159, tangs 69 on the commutator are arranged at least adjacent guide plate 161 and the commutator bore 65 is aligned with elongate slot 163 in the guide plate. A servo motor, such as for instance a double-acting air motor 165 or the like, is selectively operable to protractively move a shot pin 167 from a retracted position (not shown) into a blocking or locating position engaged with each commutator 61 passed from guide ramp 155 into guide block 159 thereby to locate each commutator in its aforementioned preselected position.

Upon the location of each commutator 61 in its preselected position in guide block 159 by shot pin 167, as discussed above, another servo motor, such as for instance a double-acting air motor 169 or the like, arranged on a carriage 171 is selectively operable to reciprocally move or slide a dispensing means, such as for instance an activator wick 173 or the like, on the carriage from a retracted position, as shown in FIG. 10, into a protracted position (not shown) projecting through elongate slot 163 in guide plate 165 and entered into the bore 65 of each commutator 61 located in its preselected position in guide block 159. When activator wick 173 is so actuated into its protracted position within the commutator bore 65, the aforementioned activator (not shown) is applied or dispensed from the wick so as to coat at least a part of the commutator bore. While wick 173 is in its protracted position, air motor 165 is further actuated to retract shot pin 167 from its locating position shown in FIGS. 9 and 10 into its at-rest position (not shown) disengaged from the commutator 61 in its preselected position in guide block 159. When shot pin 167 is so withdrawn into its at-rest position, another servo motor, such as for instance a double-acting air motor 175 or the like, is selectively operable to move carriage 171 leftwardly from an at-rest position, as shown in FIGS. 9 and 10, into a translated position (not shown) on a pair of carriage slide rods 177 into engagement with an abutment 179. Of course, since wick 173 is in its protracted position entered into bore 65 of the commutator 61, as previously described, the wick and air motor 169 are conjointly movable with carriage 175 into its leftwardly translated position thereby to displace the commutator from guide block 159 into the position shown in phantom lines in FIG. 10 onto an extension or continuation 181 of guide ramp 155. After moving the commutator 61 onto guide ramp extension 181, air motor 169 is further actuated to retractively move or elevate wick 173 from its protracted position in the commutator bore 65 through elongate slot 163 in guide plate 161 into its retracted position, and upon the disassociation of the wick from the commutator, air motor 175 may be further selectively operated to return carriage 171 from its leftwardly translated position into its at-rest position on slide rods 177, as shown in FIGS. 9 and 10. Of course, since wick 173 was elevated into its at-rest position, as previously discussed, the wick and air motor 169 are conjointly returned with carriage 171 into its at-rest position, as shown in FIGS. 9 and 10.

Subsequent to the application of the activator coating onto bores 65 of commutators 61 at work station 157 in the above described manner, the commutators continue to advance in single file formation along guide ramp extension 181 toward another work station 183 arranged in part adjacent endless conveyor 121, as best seen in FIGS. 2, 11, and 12. At work station 183, commutators 61 pass from guide ramp extension 181 into a guide passage 185 defined between a support plate 187 and another guide block 189 supported thereon. A lever 191 pivotally arranged in guide block 189 is urged by a spring 193 toward a blocking position in guide passage 185 thereby to locate each commutator passing through the guide passage.

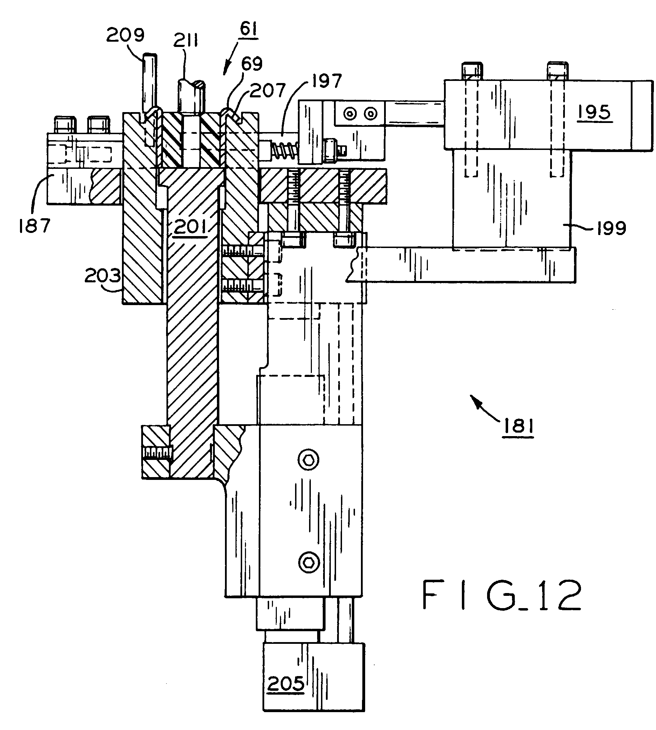

When lever 191 is in blocking engagement with the commutator 61 in guide passage 185, a servo motor, such as for instance a double acting air motor 195 or the like, is selectively operable to protractively move a generally L-shaped push member 197 from a retracted position, as shown in solid lines in FIG. 11, toward a protracted position engaged with the commutator in the guide passage, as illustrated in phantom lines in FIG. 11. Thereafter, another servo motor, such as for instance a double acting air motor 199 or the like, is selectively operable to effect a leftward translation or translatory movement of push member 197 in its protracted position, as also shown in phantom lines in FIG. 11. Air motor 199 is flange mounted to mounting plate 187 and carries air motor 195. Of course, the commutator 61 is conjointly translated with push member 197 past lever 191 causing it to trip against its spring 193, and when the push member attains its translated position, the commutator is located on a stationary seat 201 provided therefor which extends through support plate 187, as best seen in FIG. 12.

Seat 201 is flange mounted in fixed securement to support plate 187 and extends generally axially through a reciprocal plunger 203, and another servo motor, such as for instance a double acting air motor 205 or the like, is also flange mounted in fixed securement to the support plate and carries the plunger. The upper or free end of plunger 203 includes a generally annular bevelled surface or abutment 207 for engagement with tangs 69 on the commutator 61 seated on seat 201, as discussed below, and three locating pins 209, 209a, 209b extend from the plunger upper end beyond support plate 187 about seat 201 when the plunger is in its retracted position, as seen in FIGS. 11 and 12. During the aforementioned conjoint translatory movement of the commutator 61 with push member 197, it may be noted that the longer or taller locating pin 209 is disposed so as to locate between two adjacent tangs 69 on the commutator thereby to effect its rotation into a preselected rotated or located position when the commutator engages locating pins 209a, 209b so as to be seated on seat 201.

When commutator 61 is so arranged in its preselected rotated position on seat 201 in engagement with locating pins 209-209b in the manner discussed above, air motor 195 may be further selectively operable to retractively move push member 197 from its protracted position into its retracted position disassociated from the seated commutator, and air motor 199 may be subsequently further selectively operable to return the push member rightwardly into its original at-rest or retracted position, as shown in solid lines in FIG. 11.

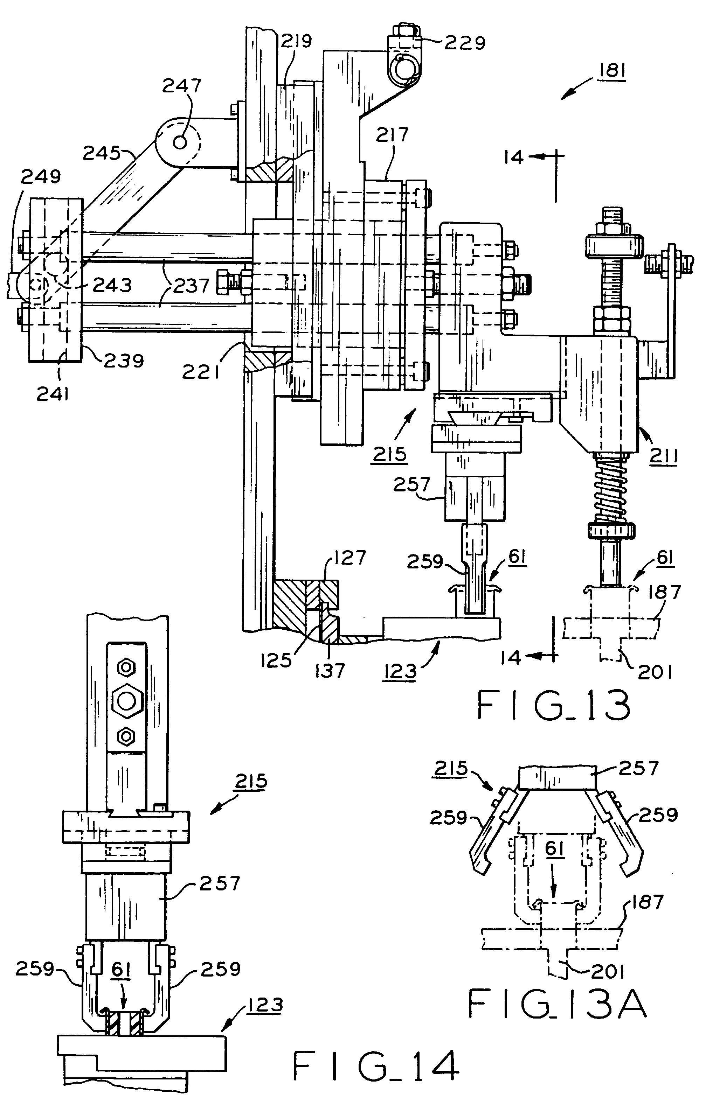

Either before, after or substantially simultaneously with the above described return movement of push member 197, a hold-down device 211 is selectively actuated into engagement with the commutator 61 to maintain its preselected rotated position on seat 201. Upon the engagement of hold-down device 211 with commutator 61, air motor 205 may be selectively actuated to protractively move plunger 203 from its retracted position, as shown in FIG. 11, into its protracted position, as shown in FIG. 12. In response to the protractive movement of plunger 203 into its protracted position, bevelled surface 207 on the upper or free end of the plunger is moved into engagement with tangs 69 on commutator 61 thereby to effect deformation or spreading of the tangs into a preselected angular relation with respect to the commutator. Subsequent to the above discussed spreading of tangs 69, air motor 205 may be further selectively actuated or reactuated to retractively move plunger 203 from its protracted position into its retracted position thereby to disassociate bevelled surface 207 on the plunger from the commutator tangs. Hold-down device 211 is further illustrated in FIG. 13, and the hold-down device and its operation will be further discussed in greater detail hereinafter.

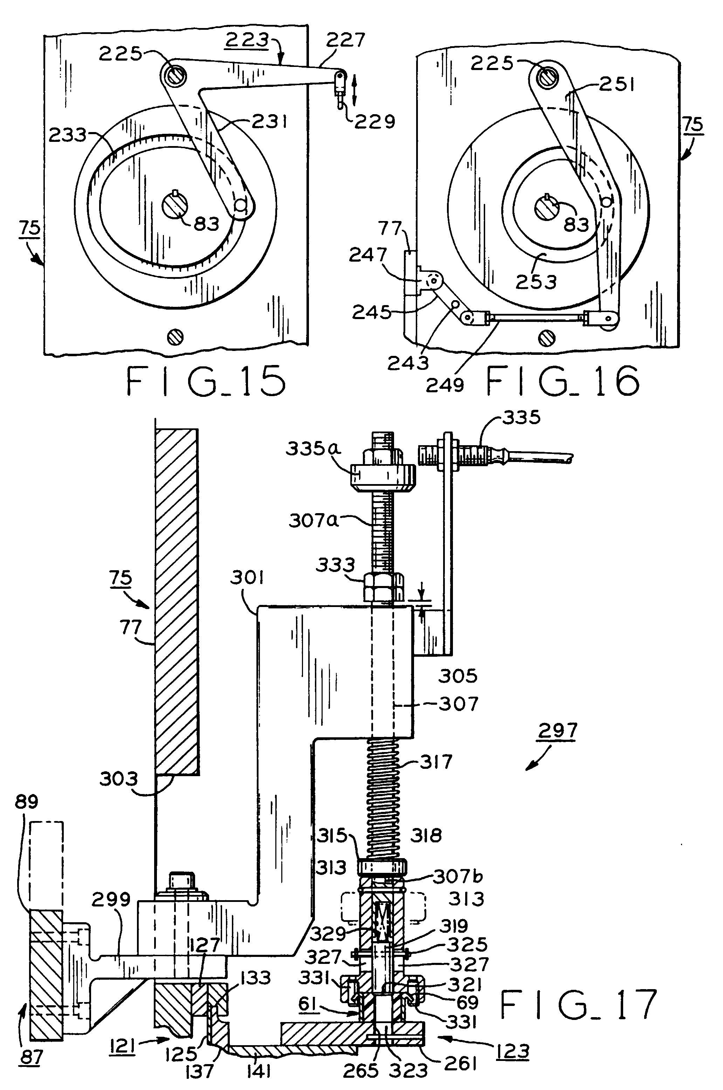

With reference to FIGS. 3 and 13-16, apparatus 71 is further provided with a pick-and-place device 215 which is interconnected in spaced apart relation with hold-down device 211 at work station 183 as seen in FIG. 13, and both devices are operatively mounted to opposite side 77 of stationary frame 75 at work station 183. A bearing housing 217 is vertically movable in a cooperating slide 219 secured to opposite side 77 of stationary frame 75 at an opening 221 therethrough, and the bearing housing is reciprocally driven in the slide by a crank 223 which is pivotally movable about a support rod 225 of stationary frame 75, FIG. 15. Crank 223 has a drive arm 227 drivingly interconnected by a link 229 with bearing housing 217 and a cam follower arm 231 associated in following relation with a groove 233 in a cam 235 secured for conjoint rotation with upper cam shaft 83 of stationary frame 75. A pair of guide rods 237 is slidably journaled for generally lateral reciprocal movement in bearing housing 217, and one of the opposite ends of the guide rods is drivingly connected with both pick-and-place device 215 and hold-down device 211. A cross-connector 239 having a slot 241 therein is interconnected between the other of the opposite ends of guide rods 237, and a roller 243 carried by a pivot arm 245 is movable in the cross-connector slot. Pivot arm 245 has one end pivotally mounted at 247 to opposite side 77 of stationary frame 75, and the other end of the pivot arm is pivotally connected by another link 249 to a crank 251 which is pivotally movable about support rod 225 of stationary frame 75, FIGS. 13 and 15. Crank 251 is also associated in following relation with a groove 253 in a cam 255 secured for conjoint rotation with upper cam shaft 83 of stationary frame 75.

In response to the conjoint rotation of cam 235 with upper cam shaft 83, crank 223 is pivoted about support rod 225 to reciprocally move bearing housing 217 downwardly in slide 219, and hold-down device 211 is conjointly movable with the bearing housing into the lower position of the hold-down device, as seen in FIG. 13. In its lower position, hold-down device 211 is engaged with the commutator 61 to retain the commutator in its preselected rotated position on seat 201 therefor during the deforming operation of plunger 203 on the commutator tangs 69, as previously discussed with respect to FIGS. 11 and 12. Thereafter, crank 223 is further pivoted about support rod 225 in response to further conjoint rotation of upper cam shaft 83 and cam 235 to effect an upward movement of bearing housing 217 in slide 219 thereby to conjointly elevate hold-down device 211 from its lower position into a raised position disassociated from the commutator 61 in its preselected rotated position on seat 201. Of course, when hold-down device 211 is being vertically moved between its lower and raised positions in the manner discussed above, slot 241 in cross-connector 239 merely floats or rides on roller 243 carried by crank 245 thereby to accommodate the vertical movement of bearing housing 217 with the hold-down device.

It may be noted that pick-and-place device 215 is conjointly movable between the lower and raised positions with hold-down device 211, and when in the raised position, both the pick-and-place device and the hold-down device are conjointly laterally movable rightwardly in FIG. 13 toward a rightwardly displaced position locating the pick-and-place device vertically above the commutator 61 shown in phantom lines on seat 201. To effect this conjoint lateral movement of the hold-down device 211 and pick-and-place device 215 into the rightwardly displaced positions (not shown) thereof, crank 251 is pivoted about support rod 225 in response to the conjoint rotation of upper cam shaft 83 and cam 255, and the pivoted movement of crank 251 is transmitted through link 249, pivot arm 245 and roller 243 onto cross-connector 239 thereby to laterally slide guide rods 237 rightwardly in bearing housing 217. When hold-down device 211 and pick-and-place device 215 are laterally moved into their rightwardly displaced positions, the pick-and-place device is predeterminately located above commutator 61 on seat 201, and a servo motor, such as for instance a double-acting air motor 257 or the like, carried on the pick-and-place device may be selectively actuated to spread or open a pair of tongs or fingers 259 pivotally secured to the pick-and-place device, as shown in FIG. 13A.

From their respective rightwardly displaced positions, hold-down device 211 and pick-and-place device 215 are conjointly moved downwardly into the aforementioned lowered positions in response to the previously discussed rotation of cam 235, and air motor 257 may be further selectively actuated or reactuated to pivotally close tongs 259 into gripping or picking engagement with commutator 61 on seat 201, as illustrated in phantom lines in FIG. 13A. Upon the gripping engagement of tongs 259 with commutator 61 on seat 201, hold-down device 211 and pick-and-place device 215 are conjointly elevated into their raised positions in response to the above discussed camming action of cam 235, and of course, the gripping engagement of the tongs with the commutator elevates it from seat 201 conjointly with the elevation of the pick-and-place device into its raised position (not shown).

When in their respective raised positions, hold-down device 211 and pick-and-place device 215 are conjointly laterally movable leftwardly in FIG. 13 toward a leftwardly displaced position in response to further camming action of cam 255, FIG. 16, and in its leftwardly displaced position, the pick-and-place device is located vertically above fixture 123 on endless conveyor 121 at work station 181. Of course, when hold-down device 211 is in its leftwardly displaced position, it is located vertically above another commutator 61 successively seated on seat 201 in the same manner as discussed hereinabove. Upon attaining their respective leftwardly displaced positions, hold-down device 211 and pick-and-place device 215 are conjointly lowered into the aforementioned lowered positions, as shown in FIG. 13, in response to the further camming action of cam 235, as previously discussed. Thus, in their respective lowered positions, hold-down device 211 is engaged with the successive commutator 61 on seat 201, as previously discussed, and pick-and-place device 215 places commutator 61 in its preselected rotated position onto fixture 123, as seen in FIG. 14. At this time, air motor 257 may be further selectively actuated or reactuated to pivotally open tongs 259 disengaging them from commutator 61 in its preselected rotated position on fixture 123 and hold-down device 211 and pick-and-place device 215 may be thereafter conjointly elevated into their leftwardly displaced positions in response to the further camming action of cam 235, as discussed above.

With reference to FIGS. 2 and 6-8, endless belt 125 on endless conveyor 121 carries the secured together face plates 137, mounting flanges 141 and fixtures 123 which are respectively predeterminately located at each indexed position of the endless conveyor throughout its predetermined course, as previously discussed, and each of the like fixtures has common component parts, as described below.

Fixture 123 is provided with a platen 261 having a generally planar upper face 263, and the platen is secured to mounting flange 141 by machine screws 145, as seen in FIGS. 6 and 7. A bore 265 extends generally vertically through platen 261 intersecting upper face 263, and a plurality of locating pins 267, 267a, 267b carried in the platen are predeterminately arranged in generally radially spaced relation about the bore so as to extend generally vertically from the upper face. Thus, upon the placement of commutator 61 in its preselected rotated position on platen 261 of fixture 123 in the manner previously discussed, bore 65 of the commutator is arranged generally in coaxial alignment with platen bore 265, and the tallest or longest locating pin 267 is engaged between adjacent commutator tangs 69 while the shorter locating pins 267a, 267b respectively abut circumferentially arranged segments 67 on the commutator, as best seen in FIG. 6. It may be noted that a cross-pin 268 carried in platen 261 extends across bore 265 and is arranged in predetermined spaced relation from platen face 263 to provide a seat for shaft extension 53a of core and shaft assembly 47, as discussed in greater detail hereinafter.

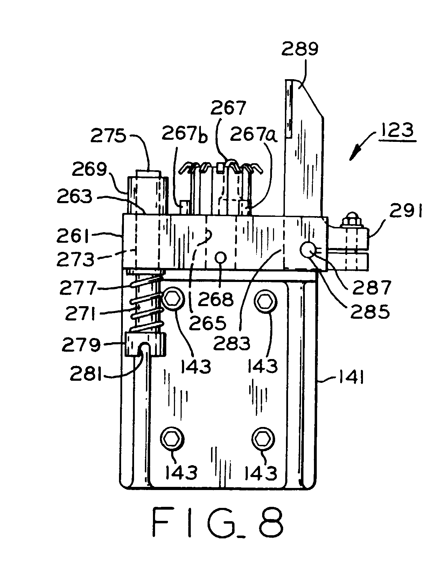

An abutment sleeve 269 secured to platen 261 extends beyond its upper face 263, and a hold-down shaft 271 is reciprocally and rotatably received in a bore 273 which extends generally vertically through the platen and sleeve, as best seen in FIG. 8. Retaining means, such as for instance a hold-down arm 275 or the like, is provided for hold-down engagement with commutator 61 on fixture 123, as discussed in greater detail hereinafter. Hold-down arm 275 is secured to the upper end of the shaft 271 so as to be conjointly movable with the shaft, and the hold-down arm is shown in its at-rest position in FIGS. 6-8 seated in abutment against the upper or free end of the sleeve. A coil spring 277 disposed about shaft 271 is caged between platen 269 and an enlarged head 279 having a slot or keyway 281 therein which is provided on the lower end of the shaft, and the compressive force of the spring acts against the enlarged head on the shaft to urge hold-down arm 275 into its at-rest position against the upper or free end of sleeve 269.

As best seen in FIGS. 7 and 8, platen 261 is also provided with an integral slotted extension or flange 283 having a generally horizontal bore 285 extending therethrough in which a pivot pin 287 is rotatably received. Locating means, such as for instance a pivot blade 289 or the like, is provided for locating engagement with a core and shaft assembly 47 (not shown), as discussed in greater detail hereinafter. Pivot blade 289 and a pivot or abutment arm 291 are secured to pivot pin 287 for conjoint pivotal movement, and the pivot blade and abutment arm extend in angular relation exteriorly of slotted flange 283 on platen 261. A torsion spring 293 disposed about pivot pin 287 is retained in torsioned engagement between slotted flange 283 and a spring retainer 295 secured to the pivot pin; therefore, the torsional force of the torsion spring is exerted on the pivot pin to conjointly pivotally urge pivot blade 289 and pivot arm 291 toward their respective at-rest positions on fixture 123, as seen in FIGS. 7 and 8. To complete the description of fixture 123, it may be noted that pivot blade 289 is arranged in alignment with one of the tangs 69 of commutator 61 when the commutator is located in its preselected rotated position on platen 261, as best seen in FIG. 7.

Subsequent to the above described placement of commutator 61 in its preselected rotated position on fixture 123 at work station 183, endless conveyor 121 is indexed in its predetermined course with discrete intermittent movement, as previously discussed, and in this manner, fixture 123 with commutator located thereon is moved from work station 183 into another successive work station 297 as schematically illustrated in phantom lines in FIG. 2.

Work station 297, as shown in detail in FIG. 17, includes a pair of interconnected mounting flanges 299, 301 which in part extend through an opening 303 provided in opposite side 77 of stationary frame 75 at work station 297, and mounting flange 299 is fixedly secured to opposite side member 89 of movable frame 87 so that mounting flanges 299, 301 are conjointly vertically reciprocally movable in the manner previously discussed with respect to movable frame 87. Movable frame 87 is shown in its lowered position in FIG. 17 with the raised position of the movable frame being illustrated in phantom lines.

Mounting flange 301 has a generally vertical bore 305 in which a shaft 307 is slidably received, and the shaft has a pair of opposite threaded ends 307a, 307b. A deforming tool 309 is provided with a body 311 having a generally axial bore 313 therethrough, and body bore 313 has a threaded upper end portion 313a which is threadedly received on the lower threaded end 307a of shaft 307 thereby to locate the deforming tool in a vertically adjusted position on the shaft. A lock nut 315 is threadedly received on lower threaded end 307a of shaft 307 in abutting or locking engagement with tool body 311 thereby to maintain deforming tool 309 against displacement from its adjusted position on the shaft, and a spring 317 disposed about the shaft is caged between mounting flange 301 and a spring retainer 318 adjustably threadedly received on lower threaded end 307a of shaft 307 for adjusting the compressive force of the caged spring.

A plunger 319 having an annular shoulder 321 thereon is slidably received in the lower end portion of body bore 313, and a stepped end 323 on the plunger extends in part coaxially through the body bore beyond or beneath tool body 311. A cross-pin 325 carried in plunger 319 extends through a pair of opposite elongate slots 327 in tool body 311 respectively intersecting body bore 313, and the cross-pin and opposite elongate slots define a lost motion connection between the plunger and the tool body. Another spring 329 disposed within body bore 313 is interposed between lower threaded end 307b of shaft 307 and plunger 323 urging cross-pin 325 toward engagement with the lower ends of opposite elongate slots 327 thereby to establish the aforementioned lost motion connection. A plurality of deformation pins 331 is carried in the lower or free end of tool body 311 extending therethrough, and the deformation pins are predeterminately arranged in radially spaced apart relation about the lower end of body bore 313, respectively.

Mounting flanges 299, 301 are conjointly vertically movable with movable frame 87 between its raised and lowered positions, as previously discussed, and tool 309 is initially conjointly vertically movable with flange 301 in response to the compressive force of spring 317 caged between flange 301 and tool 309. Upon the initial movement of tool 309 from its raised or elevated position, as illustrated in phantom lines in FIG. 17, plunger stepped end 232 is coaxially entered into locating engagement with bore 65 of commutator 61 located in its preselected rotated position on fixture 123 in the manner previously discussed, and annular shoulder 321 on plunger 319 is then moved into hold-down engagement with the commutator about its bore thereby to maintain the commutator against displacement from its preselected rotated position on the fixture. When plunger shoulder 321 is engaged with commutator 61, tool body 311 is further movable toward its lower position against the compressive force of caged spring 329 and with lost motion travel relative to plunger 319 through the aforementioned lost motion connection between cross-pin 325 and opposed elongate slots 327 in the tool body. As tool body 311 attains its lower position, deformation pins 331 are respectively entered into spreading or deforming engagement between adjacent tangs 69 on commutator 61 thereby to ensure that the tangs are equally radially spaced apart about bore 65 of the commutator. When tool body 311 is disposed on its lower position, as shown in FIG. 17, it may be noted that mounting flange 301 is further vertically movable relative to the tool body and against the compressive force of spring 317 until movable frame attains its lowered position. This above mentioned further movement of mounting flange 301 relative to the tool body 311 in its lower position is illustrated by the travel or space S between the mounting flange and a set of lock nuts 333 threadedly received on the threaded upper end 307a of shaft 307.

Subsequent to the above discussed deforming association of deformation pins 331 with tangs 69 on commutator 61, mounting flanges 299, 301 are conjointly moved with moveable frame 87 from its lower position to its upper position, and this elevating movement of the mounting flanges is transmitted to shaft 307 and tool body 311 through the abutting engagement of mounting flange 301 with lock nuts 333 threadedly received on threaded upper end 307a of the shaft. Thus, the elevating movement of mounting flanges 299, 301 effects the return movement of tool body 311 from its lower position into its raised position. During this return movement of tool body 311, the lost motion connection is reestablished between cross-pin 325 and opposite elongate slots 327 in the tool body, and upon the reestablishment of the lost motion connection, plunger 319 is conjointly movable with the tool body into its raised position thereby to disengage annular shoulder 321 from commutator 61 and withdraw plunger stepped end 323 from bore 65 of the commutator.

To complete the description of work station 297, sensing means 335, such as for instance a proximity switch or a capacitive sensor or the like, is mounted to mounting flange 301, and a sensor element 335a is threadedly received on the threaded upper end 307a of shaft 307 in an adjusted position with respect to the sensing means. Thus, in the event that no commutator was loaded onto fixture 123 at the previously discussed work station 183, tool 309 would be conjointly vertically movable with mounting flange 301 throughout the entire vertical movement of movable frame 87 between its raised and lowered position which, of course, would eliminate the aforementioned relative movement S between mounting flange 301 and tool body 311. However, upon the occurrence of the relative movement S, sensing means 335 is conjointly moved with mounting flange 301 into a lowered or sensing position with respect to sensor element 335a thereto by effect the energization of the sensing means. When so energized, sensing means 335 signals a computer (not shown) that a commutator is present on the particular fixture 123 at work station 297, and if no signal is received from the sensing means, the computer is operable to obviate the operations of successive work stations, as discussed hereinafter, when such particular fixture is indexed into the successive work stations by endless conveyor 121.

Subsequent to the above described spreading of the tangs 69 on commutator 61 carried on fixture 123 at work station 297, endless belt 125 of endless conveyor 121 is indexed in its predetermined course with discrete intermittent movement, as previously discussed, and in this manner, fixture 123 with the commutator located in its preselected rotated position thereon is successively indexed from work station 291 through an idle work station 337 into another work station 339, as schematically illustrated in phantom lines in FIG. 2. Of course, idle work station 337 may be omitted from endless conveyor 121 if desired.

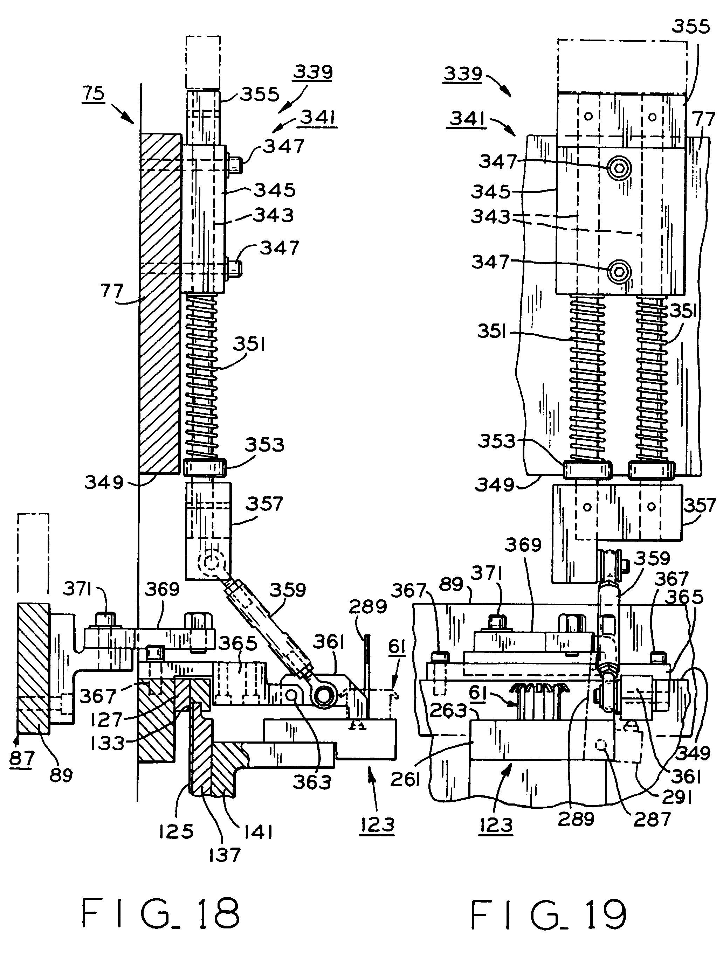

Work station 339 is illustrated in detail in FIGS. 18-24 and includes a means, indicated generally at 341, for selectively actuating or pivoting abutment arm 291 on fixture 123, as best seen in FIGS. 18 and 19 and discussed hereinafter. Actuating or pivoting means 341 has a pair of guide rods 343 vertically reciprocally movable in a bushing 345 which is secured by suitable means, such as for instance a plurality of machine screws 347 or the like, to opposite side 77 of stationary frame 75 adjacent an opening 349 therethrough. A pair of springs 351 disposed about guide rods 343 is caged between bushing 345 and a pair of spring retainers 353 adjustably threadedly received on the guide rods for adjusting the compressive forces of springs 351, and the compressive forces of the springs bias a cross-abutment or stop 355 pinned to the upper ends of the guide rods into engagement with the bushing, respectively. A cross-flange 357 is pinned to the lower end of guide rods 343 adjacent spring retainers 353, respectively, and a pivot link 359 is pivotably interconnected between the cross-flange and a lever 361 pivoted at 363 to a mounting flange 365 secured to opposite side 77 of stationary frame 75 adjacent opening 349 by suitale means, such as for instance a plurality of machine screws 367 or the like.

Opposite side member 89 of movable frame 87 is vertically reciprocally movable relative to opposite side 77 of stationary frame 75 in the manner discussed in detail hereinabove, and a driving arm 369 extending in part through opening 349 for abutting or driving engagement with cross-flange 357 is secured by suitable means, such as for instance a plurality of machine screws 371 or the like, to the opposite side member of the movable frame so as to be conjointly vertically reciprocally movable with the movable frame between its lowered position, as shown in solid lines in FIGS. 18 and 19, and its raised position, as shown in phantom lines in FIG. 18.

When movable frame 87 is in its lowered position, driving arm 369 is disengaged from cross-abutment 357, and the compressive forces of springs 351 are effective to urge guide rods 353 downwardly into their respective lower positions, as shown in FIGS. 18 and 19, thereby to engage cross-abutment 355 with bushing 345. When guide rods 353 are so resiliently urged into their respective lower positions, pivot link 359 pivotally drives lever 361 about pivot 363 into driving engagement with abutment arm 291 on fixture 123 in its indexed position at work station 339. In response to this pivoting engagement of lever 361 with abutment arm 291, pivot blade 289 is pivotally displaced from its at-rest position on fixture 123 into its displaced position, as shown in phantom lines in FIG. 19 for the purpoee of drawing clarity. Pivot blade 289 in its pivotally displaced position permits the association of core and shaft assembly 47 with commutator 61 located in Its preselected position on platen 261 of fixture 123, as discussed in greater detail hereinafter.

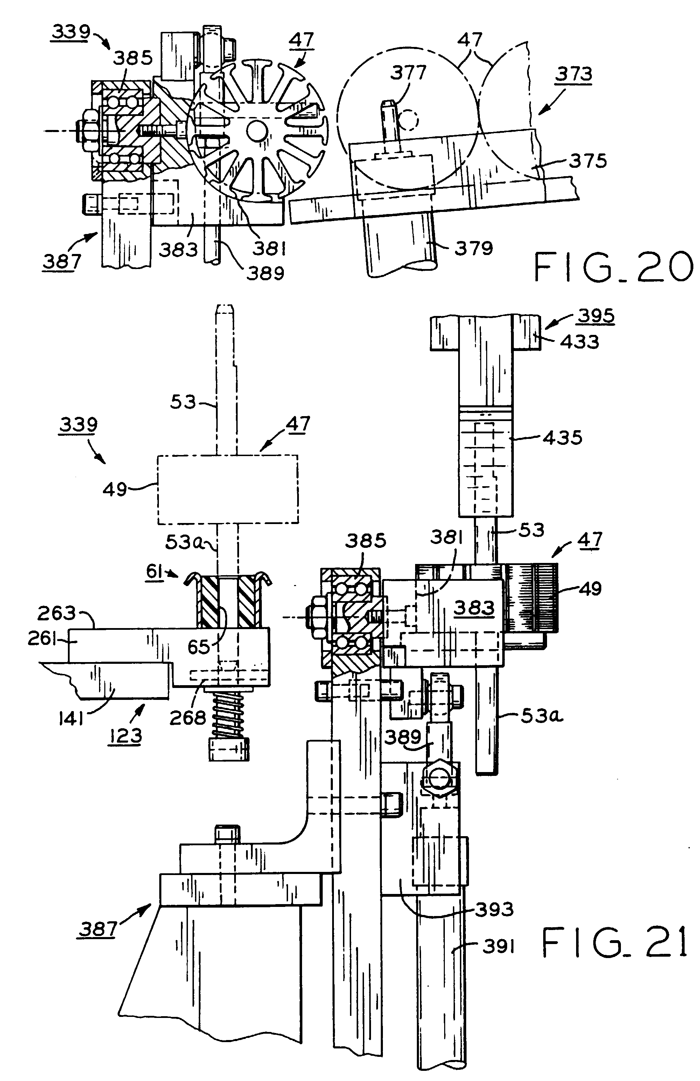

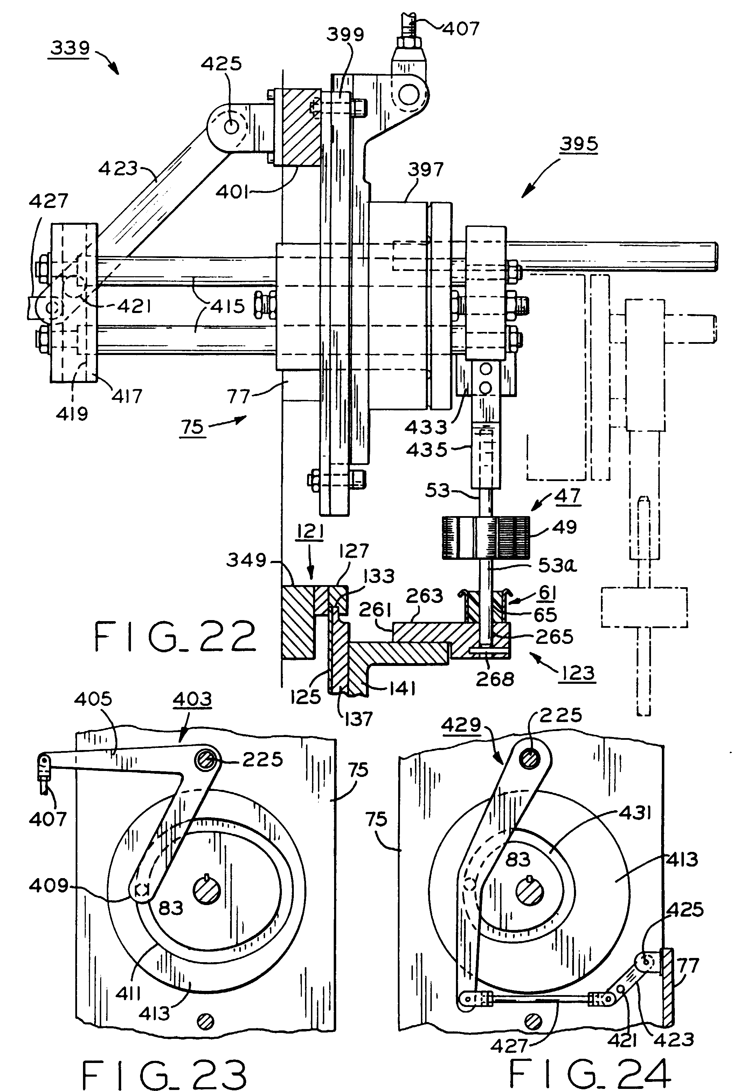

As shown in FIG. 20 and illustrated schematically in FIG. 2, a source 373 of core and shaft assemblies 47 is provided adjacent work station 339, and the source includes an inclined guide ramp 375 along which the core and shaft assemblies are successively rollable in line formation into an at-rest position (shown in phantom lines in FIG. 20) engaged with a reciprocally movable stop 377 selectively operated by a servo motor, such as for instance a double-acting air motor 379 or the like. Air motor 379 is selectively actuated to retract stop 377 from its at-rest position into a retracted position (not shown) disengaged from the core and shaft assembly 47 shown in phantom lines on ramp 375, and upon the retraction of stop 377 into its retracted position, the core and shaft assembly advances or rolls down the ramp to be received (as shown in solid lines in FIG. 20) in a conforming open-sided pocket 381 of a rotatable locating support 383 interposed between the ramp and fixture 123 at work station 339, as seen in FIGS. 20 and 21. After the advancement of core and shaft assembly past stop 377 in its retracted position, air motor 379 is further selectively actuated or reactuated to protractively move the stop from its retracted position into its at-rest position in FIG. 20 for stopping or positioning engagement with a successive one of the core and shaft assemblies on ramp 375.

Rotatable support 383 is journaled in a bearing 385 provided in a stationary support member, indicated generally at 387, which is disposed adjacent endless conveyor 121 at work station 339, and a pivot link 389 is pivotally interconnected between the rotatable support and a servo motor, such as for instance a double-acting air motor 391 or the like, which is flange mounted at 393 in fixed securement to the stationary support member, as seen in FIG. 21. Upon the selective operation of air motor 391, pivot link 389 is driven by the air motor to effect the rotation of rotatable support 383 from its at-rest position, as shown in FIG. 20, into its rotated position, as shown in FIG. 21, and of course, core and shaft assembly 47 received in pocket 381 of the rotatable support is conjointly rotatable with the rotatable support into its rotated position. When in its rotated position, rotatable support 383 locates core and shaft assembly 47 in a preselected vertical position for association with a pick-and-place device 395, as discussed below and shown in FIG. 22.

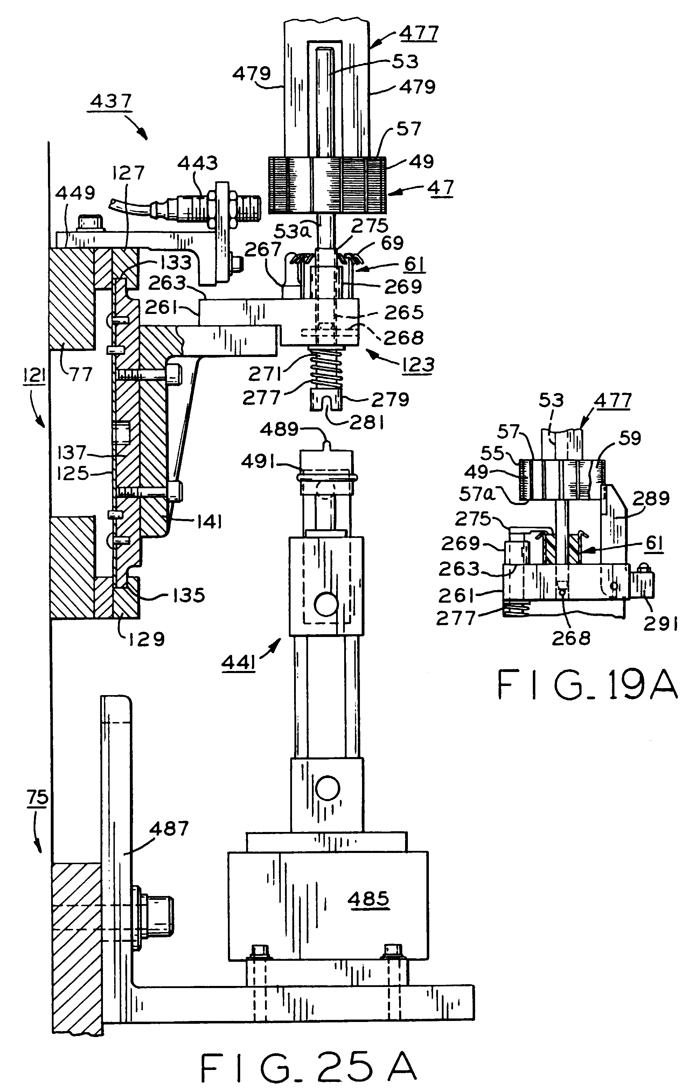

Pick-and-place device 395 is operatively associated with opposite side 77 of stationary frame 75 adjacent opening 349 therethrough at work station 339, and a bearing housing 397 is vertically movable in a cooperating slide 399 secured to opposite side 77 of the stationary frame at another opening 401, therethrough. Bearing housing 397 is reciprocally driven in slide 399 by a crank 403 which is pivotally movable about support rod 225 of the stationary frame, FIGS. 3 and 23, and the crank has a.drive arm 405 drivingly interconnected by a link 407 with the bearing housing and a cam follower arm 409 associated in following relation with a cam groove 411 in one of the opposite faces of a cam 413 secured for conjoint rotation with upper cam shaft 83 in stationary frame 75. A pair of guide rods 415 is slidably journaled for generally lateral or horizontal reciprocal movement in bearing housing 397, and pick-and-place device 395 is carried on one of the opposite ends of the guide rods. A cross-connector 417 having a slot 419 therein is interconnected between the other of the opposite ends of guide rods 415, and a roller 421 carried by a pivot arm 423 is reciprocally movable in the cross-connector slot. Pivot arm 423 has one end pivotally mounted at 425 to opposite side 77 of stationary frame 75, and the other end of the pivot arm is pivotally connected by another link 427 to a crank 429 which is pivotally movable about support rod 225 of stationary frame 75, FIGS. 3 and 24. Crank 429 is also associated in following relation with another cam groove 431 in the other of the opposite faces of cam 413, which as previously mentioned, is secured for conjoint rotation with upper cam shaft 83 in stationary frame 75.

Although pick-and-place device 395 is shown in its leftwardly displaced and lower positions in solid lines in FIG. 22, assume that the pick-and-place device is in leftwardly displaced and raised positions for the purpose of simplifying the description of its operation. Thus, in response to the conjoint rotation of cam 413 with upper cam shaft 83, crank 429 is pivoted about support rod 225, and the pivoted movement of crank 429 is transmitted through link 427, pivot arm 423 and roller 421 onto cross-connector 417 thereby to laterally move or slide guide rods 415 rightwardly in bearing housing 397. In response to this rightward movement of guide rods 415, pick-and-place device 395 is conjointly movable from its leftwardly displaced and raised positions into its rightwardly displaced and raised positions. When pick-and-place device 395 is laterally moved into its rightwardly displaced and raised positions, the pick-and-place device is predeterminately located axially above core and shaft assembly 47 seated in pocket 381 of rotatable support 383 in its rotated position, as previously discussed with respect to FIG. 21 and as shown in dotted outline in FIG. 22. Further, when pick-and-place device 395 attains its rightwardly displaced and raised positions, a servo motor, such as for instance a double-acting air motor 433 or the like, carried on the pick-and-place device may be selectively operable to spread or open a pair of tongs or fingers 435 pivotally secured to the pick-and-place device, as illustrated in phantom lines in FIG. 21.

Crank 403 is also pivoted about support rod 225 of stationary frame 75 in response to the conjoint rotation of cam 413 with upper cam shaft 83, and the pivoted movement of crank 403 is transmitted through link 407 to bearing housing 397 moving it downwardly in slide 399. In this manner, pick-and-place device 395 on guide rods 415 carried in bearing housing 397 is conjointly movable downwardly with the bearing housing thereby to move the pick-and-place device from its rightwardly displaced and raised positions into its rightwardly displaced and lower positions, as shown in phantom lines in FIG. 22. Upon the movement of pick-and-place device 395 into its rightwardly displaced and lower positions, as discussed above, air motor 433 may be further selectively operable to pivotally close tongs 435 into gripping or picking engagement with shaft extension 53 of core and shaft assembly 47 disposed in its preselected vertical position in pocket 381 of rotatable support 383 in its rotated position, as seen in FIGS. 21 and 22.

Subsequent to the gripping engagement of tongs 435 with shaft extension 53 of core and shaft assembly 47, pick-and-place device 395 is returned vertically upwardly from its rightwardly displaced and lower positions into its rightwardly displaced and raised positions in response to the further rotation of cam 413 to pivotally drive crank 403 in following engagement therewith. During this return movement of pick-and-place device 395, the pivoted movement of crank 403 is translated through link 407 onto bearing housing 397 moving it upwardly in slide 399, and the pick-and-place device on guide rods 415 carried in the bearing housing is conjointly movable therewith. Since tongs 435 on pick-and-place device 395 are grippingly engaged with shaft extension 53 of core and shaft assembly 47, as previously mentioned, the core and shaft assembly in its preselected vertical position is conjointly movable with the pick-and-place device into its rightwardly displaced and raised positions thereby to remove or disassociate the core and shaft assembly from pocket 381 of rotatable support 381 in its rotated position. After the removal of core and shaft assembly 47 from rotatable support 383 by pick-and-place device 395, air motor 391 may be further selectively actuated or reactuated to drive pivot link 389 and effect the return rotation of the rotatable support from its rotated position in FIG. 21 to its at-rest position in FIG. 20, and in its at-rest position, the rotatable support is disposed to receive the next successive core and shaft assembly on guide ramp 375 in the same manner previously discussed hereinabove.

From its rightwardly displaced and raised positions, pick-and-place device 395 is laterally movable leftwardly in FIG. 22 to return the pick-and-place device into its leftwardly displaced and raised positions in response to further rotation of cam 413 to pivotally drive crank 429 in following engagement therewith. During this return movement of pick-and-place device 395, the pivotal movement of crank 429 is translated through link 427, pivot arm 423 and roller 421 onto cross-connector 417 thereby to laterally move guide rods 415 leftwardly in bearing housing 397. In response to this leftward movement of guide rods 415, pick-and-place device 395 is conjointly movable with the guide rods to return the pick-and-place device from its rightwardly displaced and raised positions into its leftwardly displaced and raised positions. Due to the aforementioned gripping engagement of tongs 435 on pick-and-place device 395 with shaft extension 53 of the core and shaft assembly 43, the core and shaft assembly in its preselected vertical position is carried by the pick-and-place device through its lateral movement into the leftwardly displaced and raised positions of the pick-and-place device. Upon the above discussed lateral return movement of pick-and-place device 395 into its leftwardly displaced and raised positions, it may be noted that core and shaft assembly 47 in its preselected vertical position is predeterminately disposed or located in axial alignment with the axially aligned commutator bore 65 and platen bore 265 of fixture 123 at work station 339.

From its leftwardly displaced and raised positions, pick-and-place device 395 is moved vertically downwardly into its leftwardly displaced and lower positions, as shown in solid lines in FIG. 21, in response to further rotation of cam 413 to pivotally drive crank 403 in following engagement therewith. During this vertical downward movement of pick-and-place device 395, the pivotal movement of crank 403 is translated through link 407 onto bearing housing 397 moving it downwardly in slide 399, and the pick-and-place device on guide rods 415 carried in the bearing housing is conjointly movable therewith. Since tongs 435 on pick-and-place device 395 are grippingly engaged with shaft extension 53 of core and shaft assembly 47 to carry it in its preselected vertical position, as previously mentioned, the core and shaft assembly is conjointly movable with the pick-and-place device into its leftwardly displaced and lower positions thereby to insert shaft extension 53a on the core and shaft assembly coaxially into commutator bore 65 and platen bore 265 of fixture 123 which are arranged in axial alignment, as previously discussed. Upon the insertion of shaft extension 53a into platen bore 265 in fixture 123, it may be noted that the free end of shaft extension 53a is seated against cross-pin 268 within the platen bore. When shaft extension 53a is seated on cross-pin 268 in platen bore 265 on fixture 123, it may also be noted that opposite face 57a on core 49 of core and shaft assembly 47 is arranged in predetermined axial spaced relation with tongs 69 of commutator 61 in its preselected rotated position on platen 261, and air motor 433 on pick-and-place device 395 may be further selectively operable to pivotally open tongs 435 to disengage or release them from shaft extension 53 of core and shaft assembly 47.

Subsequent to the disengagement of tongs 435 from shaft extension 53 of core and shaft assembly 47, pick-and-place device 395 is returned or moved vertically upwardly from its leftwardly displaced and lower positions into its leftwardly displaced and raised positions in response to further rotation of cam 413 to pivotally drive crank 403 in cam following relation. During this return movement of pick-and-place device 395, the pivotal movement of crank 403 is translated through link 407 onto bearing housing 397 moving it upwardly in slide 399, and to complete the operation at work station 339 of the pick-and-place device, the pick-and-place device on guide rods 415 carried in the bearing housing are conjointly movable with the bearing housing thereby to return the pick-and-place device to its leftwardly displaced and raised positions.

Upon the return movement of pick-and-place device 395 into its leftwardly displaced and raised positions, as discussed above, opposite side member 89 of movable frame 87 is moved in the manner previously discussed from its lowered position as shown in solid lines in FIGS. 18 and 19, toward its raised position, as shown in phantom lines in FIG. 18. During this elevation of movable frame 87, driving arm 369 is conjointly movable with opposite side member 87 of the movable frame into abutting engagement with cross-flange 357, and in response to the driving abutment of the driving arm with the cross-flange, guide rods 343 are moved from their lower position, as shown in solid lines in FIGS. 18 and 19, into their raised position against the compressive forces of caged springs 351 thereby to disengage stop 355 from bushing 345, as shown in phantom lines in FIGS. 18 and A. When guide rods 345 are so vertically moved into their raised position, pivot link 359 pivotally returns lever 361 about pivot 363 thereby to disengage the lever from abutment arm 291 on fixture 123 at work station 339. Upon the disengagement of lever 361 from abutment arm 291, the torsional force of torsion spring 293 on fixture 123 (see FIG. 7) conjointly pivotally returns the abutment arm and pivot blade 289 from their pivotally displaced position toward their at-rest positions on the fixture.

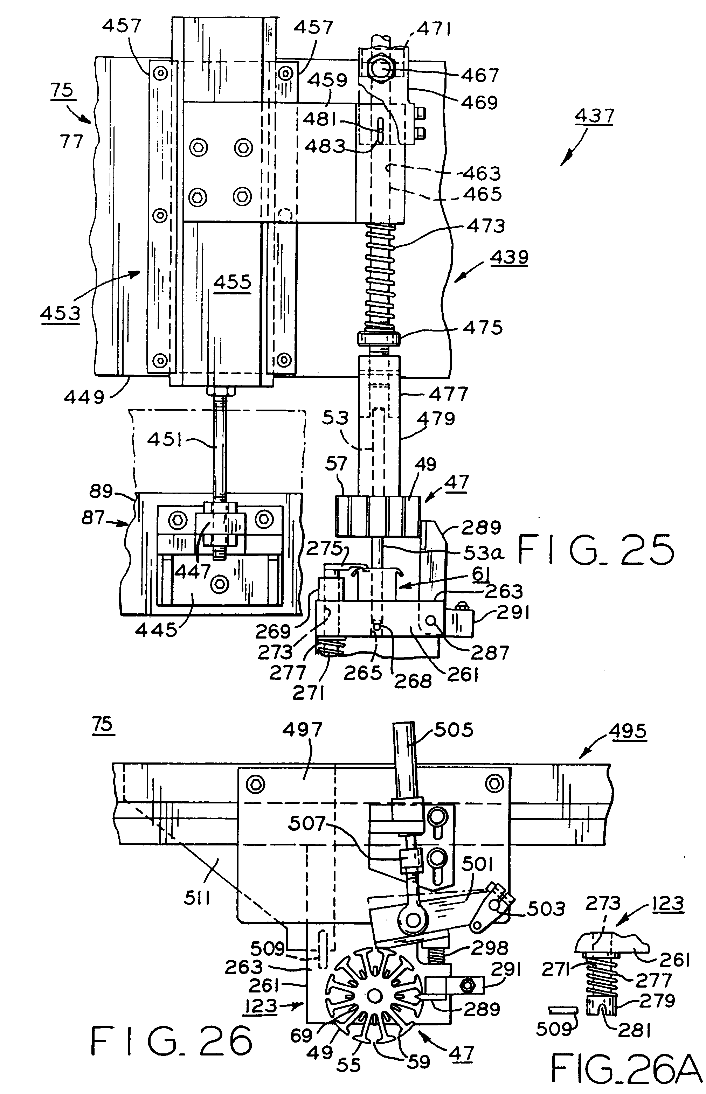

As previously discussed, the operation of pick-and-place device 395 at work station 339 locates core and shaft assembly 47 in its preselected axial position on fixture 123, and if by chance the operation of the pick-and-place device also happens to locate the core and shaft assembly in a preselected rotated position on the fixture, one of winding receiving slots 59 in core 49 will be arranged in alignment with pivot blade 289 on the fixture, as shown in FIG. 19A. Thus, upon the above discussed return movement of abutment arm 291 and pivot blade 289 into their respective at-rest positions, the pivot blade will enter the aforementioned winding receiving slot 59 aligned with the pivot blade if, by chance, core and shaft assembly 47 happens to be located in its preselected rotated position on fixture 123, and this association of the pivot blade within the aligned winding receiving slot would, of course, retain the core and shaft assembly against displacement from its preselected rotated position. When core and shaft assembly 47 is disposed in its preselected rotated position relative to commutator 61 in its preselected position on fixture 123, it may be noted that winding receiving slots 59 in core 49 of the core and shaft assembly are respectively arranged in axial alignment with tangs 61 on the commutator. As previously mentioned, the disposition of core and shaft assembly 47 in its preselected rotated position on fixture 123 by pick-and-place device 395 would be a chance occurrence; therefore, for the purpose of the following discussion, assume core and shaft assembly is not in its preselected rotated position so that the aforementioned pivoted return movement of pivot blade 289 is interrupted with the pivot blade being urged into abutting engagement with a part of circumferential surface 55 on core 49 of core and shaft assembly 47, as shown in FIG. 25. Of course, the computer (not shown) associated with endless conveyor 121 may obviate the operation of the component parts at work station 339 in the event sensing means 335 (FIG. 17) fails to sense the presence of a commutator on the fixture at work station 181, as previously mentioned.

Subsequent to the above described association of core and shaft assembly 47 with commutator 60 on fixture 123 and at work station 339, endless conveyor 121 is further indexed in its predetermined course with discrete intermittent movement, as previously discussed, and in this manner, fixture 123 is successively indexed from work station 339 into another work station 437, as schematically shown in phantom lines in FIG. 2.

Work station 437 is illustrated in detail in FIGS. 25 and 25A, and the work station includes retaining means, indicated generally at 439, for maintaining core and shaft assembly 47 against displacement from its preselected vertical position seated in fixture 123 and means, indicated generally at 441 for actuating hold-down arm 275 into engagement with commutator 61 located in its preselected rotated position on the fixture.

When fixture 123 is indexed by endless conveyor 121 into its indexed position at work station 437, a sensing means 443, such as for instance a proximity switch or a capacitive sensor or the like, signals the aforementioned computer (not shown) operably associated with apparatus 71 that core and shaft assembly 47 is present on the fixture, as seen in FIG. 25A. Of course, if core and shaft assembly 47 is absent from fixture 123, sensing means 443 will sense such absence and signal the computer, and the computer will obviate the operation not only of work station 437 but also of certain other work stations discussed hereinafter with respect to that particular fixture on which the core and shaft assembly is absent.

At work station 437, opposite side member 89 of movable frame 87 is vertically reciprocally movable relative to opposite side 77 of stationary frame 75 in the manner discussed in detail hereinbefore, and a flange 445 fixedly secured to opposite side member 89 for conjoint movement therewith has a driving arm 447 extending in part through an opening 449 provided in opposite side 77 of stationary frame 75 at work station 437, as shown in FIG. 25. Driving arm 447 is interconnected by a link 451 with a driven mechanism, indicated generally at 453, to impart thereto the vertical reciprocal movement of opposite side member 89 on movable frame 75 between its raised position, as shown in phantom lines in FIG. 25, and its lowered position, as shown in solid lines in FIG. 25, and the driven mechanism operably supports retaining means 439, as discussed below.

Driven mechanism 453 includes a vertically reciprocally movable slide 455 supported in sliding and guided engagement between a pair of opposed slide guides 457 respectively fixedly secured to opposite side 77 of stationary frame 75, and a cross-flange 459 fixedly secured to the slide for conjoint movement therewith has a vertical bore 463 for receiving a shaft 465 of retaining means 439. Thus, retaining means 439 is supported or carried by driven mechanism 453, and another sensing means 467, such as for instance a proximity switch or a capacitance sensor or the like, is flange mounted at 469 to flange 459 for conjoint movement with slide 455, as discussed hereinafter.

As previously mentioned, shaft 465 is reciprocally slidable in vertical bore 463 of flange 459, and a sensor element 471 is adjustably threadedly received on an upper threaded end portion of the shaft for sensing association with sensing means 467, as further discussed hereinafter. Resilient means, such as for instance a spring 473 or the like, disposed about shaft 465 is caged between the lower end of sleeve 461 and a spring retainer 475 adjustably threadedly received on a lower threaded end portion of the shaft for adjusting the caged compressive force of the spring. A hold-down fork 477 having a pair of depending tines 479 is threadedly received on the lower threaded end portion of shaft 465 and pinned to the shaft for conjoint movement therewith, and to complete the description of retaining means 439, a pin 481 carried by the shaft protrudes into an elongate slot 483 provided in flange 459 thereby to define a lost motion connection between the shaft and the sleeve.

When opposite side member 89 on movable frame 87 is in its raised position, as shown in phantom lines in FIG. 25, driven mechanism 453 and retaining means 439 are also in their respective raised or elevated positions (not shown). In the raised positions of driven mechanism 453 and retaining means 439, the caged compressive force of spring 473 acting on shaft 465 urges pin 81 on shaft 463 into abutting engagement with the lower end of elongate slot 483 in sleeve 471 thereby to effect the aforementioned lost motion connection between the shaft and the sleeve, and fork 471 is predeterminately spaced in axial alignment vertically above core and shaft assembly 47 on fixture 123 at work station 437 with depending tines 479 on the fork straddling opposite shaft extension 53 on the core and shaft assembly, as seen in FIGS. 25 and 25A.

In response to the vertical downward movement of opposite side member 89 on movable frame 87 from its raised position into its lowered position, driven mechanism 453 and retaining means 439 are initially conjointly movable vertically downwardly from their respective raised positions with the opposite side member on the movable frame. The vertically downward movement of retaining means 439 is terminated upon the seating or abutting engagement of tines 479 on fork 477 in displacement preventing engagement against opposite end face 57 of core 49 on core and shaft assembly 47 which defines the lower position of the retaining means, as shown in FIGS. 25 and 25A. Thus, it may be noted that the engagement of tines 479 on fork 477 with core and shaft assembly 47 is effective to maintain the core and shaft assembly in its preselected vertical position on fixture 123 seated against cross-pin 268 in platen bore 265 of the fixture.

When retaining means 439 attains its lower position, as discussed above, driven mechanism 453 is further vertically downwardly movable relative to retaining means 439 in its lower position until opposite side member 89 on movable frame 87 attains its lowered position. In response to this further relative movement of driven mechanism 453 when retaining means is in its lower position, it may be noted that cross-flange 459 is moved downwardly relative to shaft 465 against the compressive force of spring 473 thereby to limit the force which may be exerted by fork 477 in its hold-down or retaining engagement with core and shaft assembly 47 on fixture 123 at work station 437. Further, in response to the relative movement of driven mechanism 453, the lower end of elongate slot 483 in cross-flange 459 is moved vertically downwardly through a lost motion travel to disengage pin 481 on shaft 465, and sensing means 467 on the cross-flange remains in sensing relation with sensor element 471 on the upper threaded end portion of shaft 465.

In the event that core and shaft assembly 47 was for some reason not seated in its preselected vertical position against cross-pin 268 in platen bore 265 of fixture 123, tines 479 on fork 477 would engage such core and shaft assembly before retaining means 439 could attain its lower position; therefore, it may be noted that the aforementioned relative movement of driven mechanism 453 would be great enough to pass sensing means 467 vertically downwardly beyond sensor element 471 on the upper threaded end portion of shaft 465. When so passed out of sensing relation with sensor element 465, sensing means 471 signals the aforementioned computer (not shown) that core and shaft assembly 47 is improperly disposed on fixture 123 at work station 437, and in response to such sensing means signal, the computer is operable to obviate the operation at certain other work stations effecting the assembly of armature 45 with respect to that particular fixture on which the core and shaft assembly is improperly disposed.

In response to the return or vertically upward movement of opposite side member 89 on movable frame 87, from its lowered position into its raised position, driven mechanism 453 is conjointly movable from its lower position to its raised position with opposite side member 89; however, in response to the compressive force of caged spring 473 acting on shaft 465, retaining means 439 remains in its lower position until the lower end of elongate slot 483 in cross-flange 459 is moved with lost motion travel into reengagement with pin 481 in shaft 465 thereby to reestablish the aforementioned lost motion connection between the cross-flange and the shaft. Upon the reestablishment of the lost motion connection between cross-flange 459 and shaft 465, retaining means 439 is conjointly movable vertically upwardly with driven mechanism 453 into their respective raised positions thereby to disengage tines 479 on fork 477 from opposite end face 57 of core 49 on core and shaft assembly 47 seated in its preselected vertical position on fixture 123 at work station 437.

Either before, after, or substantially simultaneously with the above discussed operation of retaining means 439 at work station 437, the operation of actuating means 439 may be effected. As seen in FIG. 25A, actuating means 439 includes a multi-motion actuator 483 which is flange mounted at 487 in fixed securement to opposite side 77 of stationary frame 75 so as to axially align with enlarged head 279 on hold-down shaft 271 in fixture 123 at work station 437. Multi-motion actuator 485 is a model MAICFX-PL multi-motion actuator available from PHD, Inc., Fort Wayne, Indiana.

When fixture 123 is in its indexed position at work station 437, slot 281 in enlarged head 279 on hold-down shaft 271 of the fixture is predeterminately located in axial and radial alignment with a tongue 489 extending from a drive rotor 491 of multi-motion actuator 485. Multi-motion actuator 485 is operable to axially move drive rotor 491 into driving engagement with enlarged head 279 of the fixture hold-down shaft 271 so as to insert tongue 489 on the drive rotor into slot 281. Further axial movement of drive rotor 491 axially displaces hold-down shaft 271 in platen bore 261 against the compressive force of caged spring 277 thereby to axially displace hold-down arm 275 from its previously mentioned at-rest position seated against the upper end of sleeve 269, as seen in FIG. 25A. Thereafter, multi-motion actuator 485 is further operable to effect a predetermined rotation of its drive rotor 491 through approximately ninety degrees (90°), and hold-down arm 275 is, of course, conjointly rotated with the drive rotor. Subsequent to the above discussed predetermined conjoint rotation of drive rotor 491 and hold-down arm 275, multi-motion actuator 485 is operable to axially return the drive rotor to its at-rest position, as shown in FIG. 25A, thereby to disengage the drive rotor from hold-down shaft 271. During the return of drive rotor 491 to its at-rest position, the compressive force of caged spring 277 is effective to move hold-down shaft 271 axially downwardly in platen bore 273, and hold-down arm 275 is conjointly movable axially downward with the hold-down shaft into a displaced or hold-down position in hold-down engagement with commutator 61 located in its preselected rotated position on platen 261 of fixture 123, as best seen in FIG. 25. When hold-down arm 275 is in its displaced position, slot 181 in enlarged head 279 of hold-down shaft 271 is located in the position shown in FIG. 25A for sensing purposes as discussed hereinafter, and the compressive force of caged spring 277 resiliently maintains the hold-down arm in its displaced position.

Subsequent to the above described operations at work station 437, conveyor 121 is indexed in its predetermined course with discrete intermittent movement, as previously discussed, thereby to effect the conjoint indexing movement of fixture 123 from work station 437 into a successive indexed position at another work station 493, as schematically shown in phantom lines in FIG. 2; however, during the movement of the fixture between work station 437 and 493, it may be noted that the fixture passes through an intermediate work station 495, as shown in detail in FIG. 26 but omitted from FIG. 2.

At intermediate work station 495, a mounting flange 497 extends through an opening 499 in opposite side 77 of stationary frame 75, and the flange is fixedly secured to opposite side 77. A friction shoe 501 is pivotally mounted at 503 to flange 497, and a servo motor, such as for instance a spring loaded double-acting air motor 505 or the like is fixedly secured to flange 497 and is connected by a pivot link 507 to the friction shoe for pivotally the friction shoe between a pivotally retracted position, as shown in phantom lines in FIG. 26, and a pivotally displaced position disposed in the path of travel of core 49 on core and shaft assembly 47 located on fixture 123 during its aforementioned movement between work stations 437 and 493, as shown in solid lines in FIG. 26. As previously discussed, pivot blade 289 on fixture 123 was assumed to be biased into engagement with a part of circumferential surface on core 49 at work station 437, as shown in FIG. 25. Therefore, when friction shoe 501 is in its pivotally displaced position, it fractionally engages circumferential surface 55 on core 49, and this frictional engagement effects a slight rotation of core and shaft assembly 47 on fixture 123 until one of winding receiving slots 59 is rotated into alignment with pivot blade 289, as best seen in FIG. 26. When so aligned, torsion spring 298 on fixture 123 biases pivot blade 289 into the aforementioned aligned winding receiving slot 59 in locating engagement with core 49 thereby to define a preselected rotated position of core and shaft assembly 47 carried on fixture 123. Thus, upon the entry of pivot blade 289 into the aligned winding receiving slot 59 in core 49, the pivot blade reassumes its at-rest position on fixture 123, and since air motor 505 is spring loaded, as previously mentioned, such spring load controls or limits the intensity of the frictional engagement between friction shoe 501 and circumferential surface 55 of core 49. Upon the above described rotation of core and shaft assembly 47 into its preselected rotated position, it may be noted that winding receiving slots 59 in core 49 of the core and shaft assembly are respectively located in predetermined axial alignment with tangs 69 on commutator 61 which is disposed in its preselected rotated position on fixture 123, and as discussed hereinabove.

Subsequent to the above described establishment of the preselected rotated position for core and shaft assembly 47 on fixture 123, air motor 505 may be actuated or reactuated to pivotally return friction shoe 501 from its pivotally displaced position into its pivotally retracted position thereby to disengage the friction shoe from circumferential surface 55 of core 49. Of course, if core and shaft assembly 47 is by chance located in its preselected rotated position at work station 437, as previously discussed, then the locking or rotative displacement preventing engagement of pivot blade 289 with core 49 would be effective to maintain the core and shaft assembly in its preselected rotated position on fixture 123 when friction shoe 501 is frictionally engaged with the core at work station 495.

Another sensing means 509, such as for instance a fiber optic reflective sensor or the like, is flange mounted at 511 to opposite side 77 of stationary frame 75 in work station 495, and as illustrated in FIG. 26A, the sensing means is disposed to sense reflective light from enlarged head 279 on hold-down shaft 271 of fixture 123 as the fixture is moved past the sensing means toward work station 493 from work station 495. As previously discussed, slot 281 in enlarged head 274 on hold-down shaft 271 of fixture 123 is predeterminately arranged in the position shown in FIGS. 25A and 26A when hold-down arm 275 is in its displaced position in hold-down engagement with commutator 61 on the fixture. Therefore, when hold-down arm 275 is properly disposed in its displaced position, sensing means 509 senses uninterrupted light reflection from enlarged head 279 on hold-down shaft 271 of fixture 123 as the enlarged head passes the sensing means during the movement of the fixture from work station 495 to work station 493. If for some reason, hold-down arm 275 is in its at-rest position so as to be disengaged from commutator 61 on fixture 123, slot 281 in enlarged head 279 on hold-down shaft 271 of the fixture would be disposed in straight line or see-through relation with sensing means 509 as the enlarged head is moved past the sensing means; therefore, the slot would interrupt the reflective light from the enlarged head sensed by the sensing means. This aforementioned interruption of the reflective light sensed by sensing means 509 indicates that hold-down arm 275 is not engaged in hold-down relation with commutator 61 on fixture 123, and the sensing means will signal the computer (not shown) associated with apparatus 71. In response to the signal from sensing means 509, the computer will function to obviate operations at certain successive work stations effecting the assembly of armature 45 with respect to that particular fixture 123 on which hold-down arm 275 is disengaged from commutator 61.

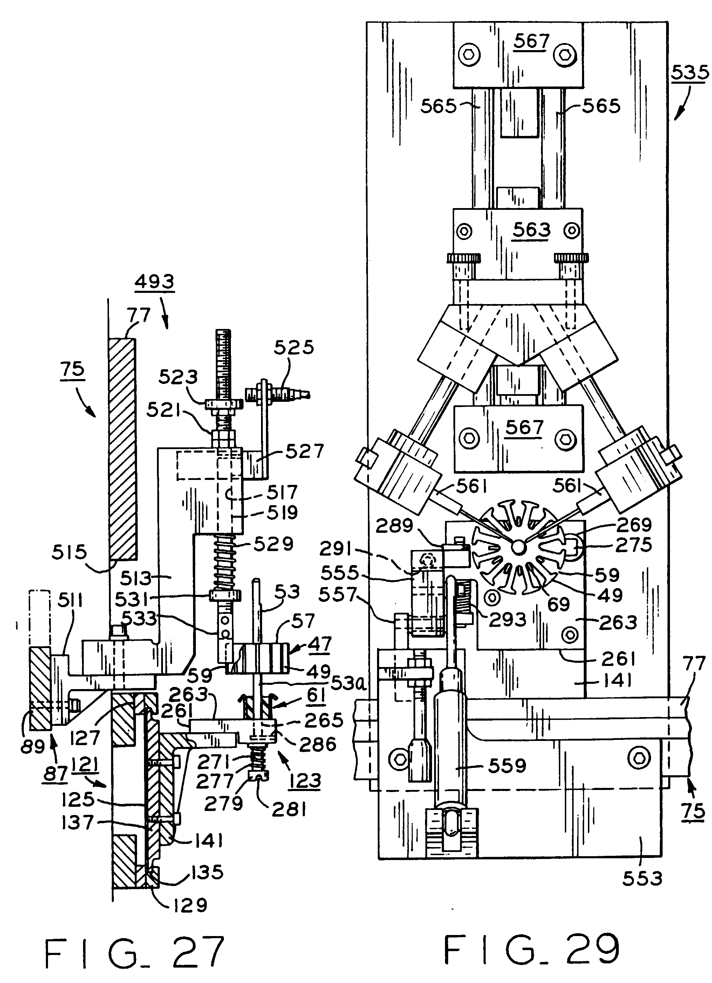

Work station 493, as shown in detail in FIG. 27, includes a pair of fixedly interconnected mounting flanges 511, 513 which in part extend through an opening 515 provided in opposite side 77 of stationary frame 75 at work station 493, and mounting flange 511 is fixedly secured to opposite side member 89 of movable frame 87 so that the mounting flanges are conjointly vertically reciprocally movable with movable frame 87 in the manner previously discussed with respect to the movable frame. Movable frame 87 is shown in its lowered position in solid lines in FIG. 27 with the raised position of the movable frames being illustrated in phantom lines in FIG. 27.

Mounting flange 513 has a generally vertical bore 517 in which a shaft 519 is slidably received, and a pair of lock nuts 521 is threadedly received on upper threaded end portion of the shaft for abutment with the mounting flange about the vertical bore therein. A sensor element 523 is adjustably threadedly received on the upper threaded end portion of shaft 519 for association with a sensing means 525, such as for instance a proximity switch or a capacitive sensor or the like, which is flange mounted at 527 to mounting flange 513 for conjoint movement therewith. Resilient means, such as for instance a spring 529 or the like, disposed about shaft 519 is caged between mounting flange 513 and a spring retainer 531 threadedly received on a lower threaded end portion of the shaft for adjustably varying the compressive force of caged spring 529 and for urging lock nuts 521 into abutment with mounting flange 513. A locating blade 533 is fixedly secured to the lower threaded end portion of shaft 519, and the locating blade depends from the shaft for locating association with one of winding receiving slots 59 in core 49 of core and shaft assembly 47, as discussed hereinafter.

When fixture 123 is moved into its indexed position at work station 493 by endless conveyor 121, commutator 61 is located in its preselected rotated position on the fixture, and core and shaft assembly 47 is located in both its preselected axial position and its preselected rotated position on the fixture with respect to the commutator, as previously discussed. As fixture 123 attains its indexed position at work station 493, mounting flanges 511, 513 are conjointly downwardly movable with movable frame 87 into its lowered position, as shown in solid lines in FIG. 27, and in response to the compressive force of caged spring 429 acting on shaft 519, the shaft is also conjointly downwardly movable with the mounting flanges and the movable frame to insert locating blade 533 into one of the winding receiving slots 51 in core 49 of core and shaft assembly 47 located in its preselected rotated position on fixture 123. Of course, the entry of locating blade 533 into the winding receiving slot 59 in core 49 of core and shaft assembly 47 indicates that the core and shaft assembly is located in its preselected rotated position on fixture 123. When locating blade 533 is so entered into the winding receiving slot 51 in core 49 of core and shaft assembly 47 on fixture 123, it may be noted that there is no change of position between sensing means 525 and its sensor element 523 due to the conjoint downward movement of shaft 519 with mounting flanges 511, 513 and movable frame 87. To complete the operation of work station 493, mounting flanges 511, 513 and shaft 519 are conjointly upwardly movable with movable frame 87 from its lowered position into its raised position thereby to withdraw locating blade 533 from winding receiving slot 59 in core 49 of core and shaft assembly 47 on fixture 123.

Albeit not shown for the purpose of drawing simplification, it may be noted that during the aforementioned conjoint downward movement of mounting flanges 511, 513 and shaft 519, locating blade 533 would be moved into engagement with opposite end face 57 on core 59 instead of entering one of the winding receiving slots if for some reason core and shaft assembly 47 was not in its preselected rotated position on fixture 123 at work station 493. In the event of the aforementioned engagement between locating blade 533 and opposite end face 57 on core 49, mounting flanges 511, 513 would then be movable downwardly relative to shaft 519 against the compressive force of caged spring 529, and in response to the relative downward movement of the mounting flanges, sensing means 525 will be conjointly movable downwardly with the mounting flanges into a position sensing the presence of sensor element 523 on the threaded upper end portion of shaft 519. When sensing means 525 is so arranged in sensing relation with sensor element 523, the sensing means sends a signal to the computer (not shown) associated with apparatus 71 which indicates that core and shaft assembly 47 is not in its preselected rotated position on fixture 123 at work station 493. In response to the signal received from sensing means 525, the computer will function to obviate the operation at certain successive work stations effecting the assembly of armature 45 on that particular fixture 123 on which the core and shaft assembly is displaced from its preselected rotated position.

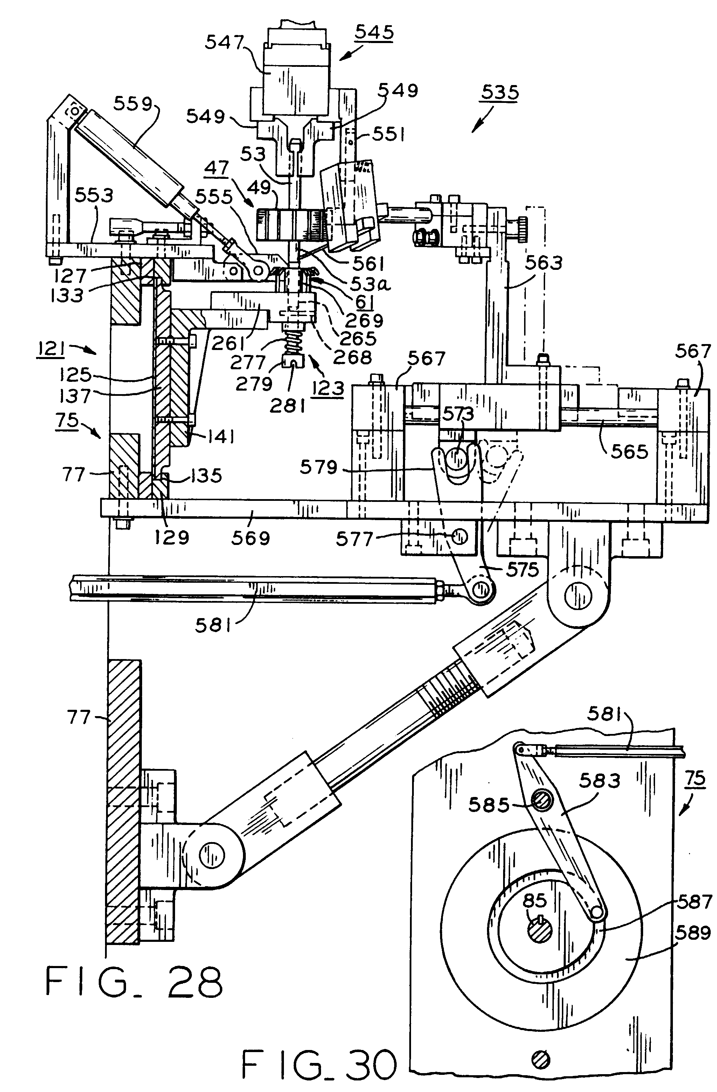

Subsequent to the above discussed operations at work station 493, endless conveyor 121 is further indexed in its predetermined course with discrete intermittent movement, as previously discussed, thereby to effect the conjoint indexing movement of fixture 123 from work station 493 into another successive work station 535, as schematically shown in phantom lines in FIG. 2 and as illustrated in detail in FIGS. 28-31.

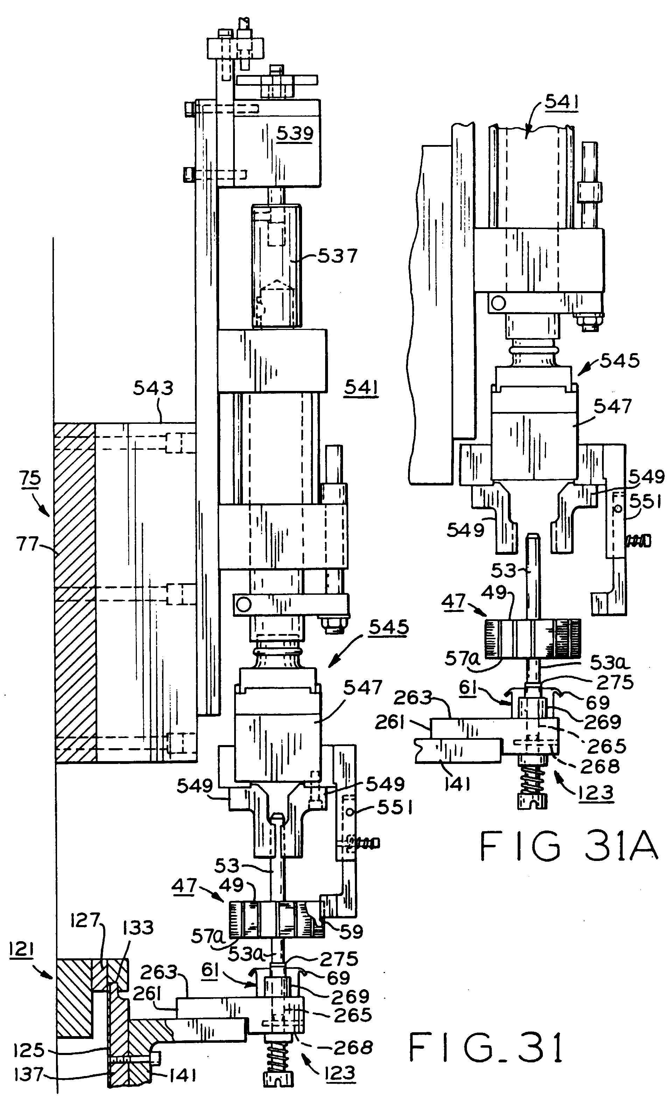

As shown in FIG. 31, a coupling means 537 is operable generally for transmitting rotary movement from a rotary actuator 539 to a drill unit 541 and for accommodating vertical reciprocal movement of the drill unit relative to the rotary actuator, and both the rotary actuator and the drill unit are flanged mounted at 543 to opposite side 77 of stationary frame 75 at work station 535. Another pick-and-place device 545 is carried by drill unit 541 so as to be arranged axially vertically above core and shaft assembly 47 on fixture 123 when it is located in its indexed position at work station 535. Rotary actuator 539 is a model 0180752-1-01 available from PHD Inc., Fort Wayne, Indiana, and drill unit 541 is a model 150-1.5 available from Blackalloy Co. of America, Patterson, New Jersey.

When fixture 123 is at work station 535, drill unit 541 is operable to move pick-and-place device 545 from its raised position, as shown in FIG. 31A, into its lower position, as shown in FIG. 31, and a servo-motor, such as for instance a double-acting air motor 547 or the like, on the pick and place device pivotally actuates its pair of tongs 549 into gripping or picking engagement with shaft extension 53 of core and shaft assembly 43 on the fixture. Upon the gripping engagement of tongs 549 with shaft extension 53 of core and shaft assembly 47, it may be noted that another locating blade 551 carried on one of tongs 549 is conjointly pivotably movable therewith into a locating position inserted into one of the winding slots 59 in core 49 of the core and shaft assembly thereby to maintain its preselected rotated position on fixture 123.

A mounting flange 553 is fixedly secured to opposite side 77 of stationary frame 75 to support a lever 555 which is pivotally mounted at 557 to the mounting flange, as shown in FIGS. 28 and 29, and a servo motor, such as for instance a double-acting air motor 559 or the like, is pivotally interconnected between the mounting flange and the lever. Subsequent to the aforementioned insertion of locating blade 551 into locating engagement with core 49 of core and shaft assembly 47 on fixture 123, air motor 559 is selectively operable to pivotally drive lever 555 from its at-rest position, as shown in phantom lines in FIG. 28, into a pivotally displaced position, as shown in solid lines in FIGS. 28 and 29. Upon this pivotal displacement of lever 555, it engages and pivotally drives abutment arm 291 on fixture 123 at work station 535 thereby to conjointly pivotally move pivot blade 289 from its at-rest position on the fixture extending into a winding receiving slot 59 in core 49 on core and shaft assembly 47 into the pivotally displaced position of the pivot blade disengaged from the core, as seen in FIG. 29. When pivot blade 289 on fixture 123 is disengaged from core 49 of core and shaft assembly 47, locating blade 551 on pick-an-place device 545 remains in locating engagement with the core thereby to ensure the retention of core and shaft assembly 47 in its preselected rotated position, as previously discussed and shown in FIG. 31.

Upon the disengagement of pivot blade 289 on fixture 123 from core 49 on core and shaft assembly 47, drill unit 541 is further operable to vertically move pick-and-place device 545 axially upwardly toward its raised position, and since tongs 549 are grippingly engaged with shaft extension 53 of core and shaft assembly 47, the core and shaft assembly is conjointly elevated with the pick-and-place device relative to commutator 61 on the fixture thereby to disengage the core and shaft assembly from seating engagement with cross-pin 268 in the fixture, as seen in FIG. 28.

A set of means, such as for instance nozzles 561 or the like, are shown in FIGS. 28 and 29 for dispensing or applying the aforementioned hardenable adhesive material (not shown) onto a preselected part of shaft extension 53a on core and shaft assembly 47 when it is conjointly elevated by pick-and-place device 545 toward its raised position. Nozzles 561 are angularly arranged with each other on a support 563 which is slidable on a pair of guide rods 565 respectively interposed between a pair of spaced apart abutments 567 fixedly secured to a mounting flange 569 having a slot 571 therein, and the mounting flange is fixedly secured to opposite side 77 of stationary frame 75 at work station 535. Nozzle support 563 carries a cross-shaft 573, and a lever 575 pivotally mounted to mounting flange 569 at 577 extends through slot 571 in the mounting flange. A fork 579 on the upper end of lever 575 is drivingly interconnected with cross-shaft 573 on nozzle support 563, and a motion transmitting link 581 is interconnected between the lower end of the lever and a crank 583 pivotally or rotatably supported on another support rod 585 of stationary frame 75, as seen in FIGS. 3 and 30. Crank 583 is associated in following relation with a cam groove 587 in a cam 589 which is rotatably secured to lower cam shaft 85 in stationary frame 75 for conjoint rotation with the lower cam shaft.

In response to the conjoint rotation of lower cam shaft 85 and cam 589, crank 583 is pivoted about support rod 585 in following relation with cam groove 587, and the pivoted movement of the crank is transmitted through link 581 to lever 575 effecting the pivotal movement about pivot 577 of the lever from its at-rest position, as shown in phantom lines in FIG. 28, into its pivotally displaced position, as shown in solid lines in FIG. 28. Due to the driving interconnection of lever fork 579 with cross-shaft 573 on nozzle support 563, the nozzle support is laterally leftwardly driven from its at-rest position on guide rods 565, as shown in phantom lines in FIG. 28, into its dispensing position, as shown in solid line sin FIG. 28, conjointly with the pivotal movement of lever 575. When nozzles support 563 is in its dispensing position, nozzles 561 are spaced adjacent shaft extension 57 on core and shaft assembly 47 which, as previously mentioned, with respect to FIG. 28, has been elevated relative to fixture 123 at work station 535 by pick-and-place device 545. Thereafter, a preselected amount of the hardenable adhesive material (not shown) may be dispensed through nozzles 561 onto a preselected part of shaft extension 53a on core and shaft assembly 47 in its elevated position with respect to commutator 61 on fixture 123.

In order to ensure the application of the hardenable adhesive material from nozzles 561 completely about the preselected part of shaft extension 53a on core and shaft assembly 47, rotary actuator 539 is selectively operable for effecting the rotation through coupling means 537 and drill unit 541 of pick-and-place device 545 in the aforementioned raised position thereof, and since tongs 549 of the pick-and-place device are grippingly engaged with shaft extension 53, as previously discussed, the core and shaft extension is conjointly rotated with the pick-and-place device relative to the nozzles. In actual practice, rotary actuator 539 is operable to effect the rotation of core and shaft assembly 47 in one direction through about one hundred eighty degrees (180°) and a return rotation in the opposite direction of about one hundred eighty degrees (180°); however, it is contemplated that such rotation of the core and shaft assembly may be greater or less than that stated above and also in only one direction, if desired.

Subsequent to the above discussed application of the hardenable adhesive material onto the preselected part of shaft extension 53a, cam 589 is further conjointly rotatable with lower cam shaft 85 to further pivotally drive crank 583 in following engagement with cam groove 587, as seen in FIGS. 3 and 30, and the pivotal movement of the crank is translated through link 581 to lever 575 effecting the return pivotal movement of the lever from its pivotally displaced position into its at-rest position, as seen in FIG. 28. Of course, due to the driving interconnection of fork 579 on lever 575 with cross-shaft 573 on nozzle support 563, the aforementioned return pivotal movement of the lever is effective to drive the nozzle support from its dispensing position into its at-rest position on guide rods 565 thereby to displace nozzles 561 from shaft extension 53a on core and shaft assembly 47.

Upon the above discussed return movement of nozzle support 563 to its at-rest position, drill unit 541 is further selectively operable to move pick-and-place device 545 vertically downwardly from its raised position, as shown in FIG. 28, into its lower position, as shown in FIG. 31. When pick-and-place device 545 is so returned to its lower position, it may be noted that shaft extension 53a is reseated on cross-pin 268 in bore 265 of fixture 123, and it may also be noted that the preselected part on shaft extension 53a is reinserted into bore 65 in commutator 61 on fixture 123. In this manner, the hardenable adhesive material applied onto the preselected part of shaft extension 53a is communicated with the activator (not shown) for the hardenable adhesive material coated onto bore 65 of the commutator 61, as previously described. Thereafter, rotary actuator 539 is further selectively operable to effect the rotation of core and shaft assembly 47 and its return rotation, in the same manner as previously discussed, to ensure that the hardenable adhesive material on the preselected part of shaft extension 53a of the core and shaft assembly is mixed with the activator coated onto commutator bore 65. Upon the mixing of the hardenable adhesive material with the activator therefor, the hardenable adhesive material hardens in place in adhering relation between commutator 61 and shaft extension 53a of core and shaft assembly 47 thereby to bond together the commutator and the core and shaft assembly in their respective preselected rotated positions on fixture 123 with opposite end face 57a on core 49 of the core and shaft assembly being predeterminately axially spaced from the commutator.

When the hardenable adhesive material and the activator are mixed together, as discussed above, air motor 559 is actuated or reactuated to pivotally return lever 555 from its pivotally displaced position shown in FIG. 29 to its at-rest position, shown in phantom lines in FIG. 28. Upon the pivotal return movement of lever 555 to its at-rest position, the lever is disengaged from abutment arm 291 on fixture 123, and the torsional force of torsion spring 293 acting on the abutment arm and pivot blade 289 effects their return pivotal movement into their respective at-rest positions on the fixture thereby to reinsert the pivot blade into locating engagement with the cooperating winding receiving slot 59 in core 49 of core and shaft assembly 47 in its preselected rotated position on the fixture. After the above discussed return movement of pivot blade 289 to its at-rest position on fixture 123, air motor 547 of pick-and-place device is selectively actuated to pivotally displace or open tongs 549 from their gripping engagement with shaft extension 53 on core and shaft assembly 47 when the pick-and-place device is in its lower position, as shown in FIG. 31, and upon the opening of tongs 549, drill unit 541 is further selectively operable to vertically move the pick-and-place device from its lower position into its raised position, as shown in FIG. 31A. Of course, when tongs 549 are opened in the manner discussed above, locating blade 551 is also pivotally displaced from its locating engagement with one of the winding receiving slots 59 in core 49 of core and shaft assembly 47 on fixture 123; however, it may be noted that the previously discussed re-engagement of pivot blade 289 on the fixture with one of the winding receiving slots retains the core and shaft assembly against displacement from its preselected rotated position on the fixture.

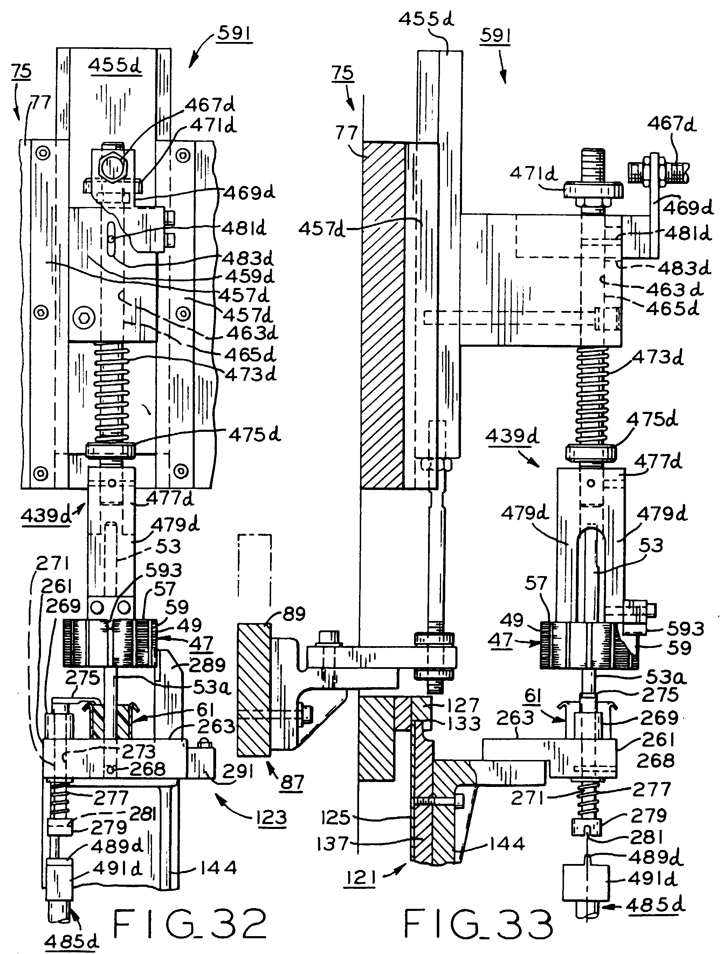

Subsequent to the above described operations at work station 535, endless conveyor 121 is further indexed in its predetermined source with discrete intermittent movement, as previously discussed, thereby to effect the conjoint indexing movement of fixture 123 from work station 535 into another successive work station 591, as schematically shown in FIG. 2 and illustrated in detail in FIGS. 32 and 33. Work station 591 is the same as work station 437, as discussed hereinabove with respect to FIGS. 25 and 25A; therefore, with the exceptions noted below, a description of work station 591 and its operations is omitted for the purpose of brevity of disclosure, but the component parts of work station 591 corresponding to those of work station 437 are designated by the subletter "d". Furthermore, for the purpose of drawing simplification, multi-motion actuator 485 at work station 437, as shown in FIG. 25A, is in part omitted from FIGS. 32 and 33 which respectively show only the driven rotor 491d and its tongue 489d.

At work station 591, a locating blade 593 is secured in a preselected position on one of the tines 479d of fork 477d, and when retaining means 439d attains its lower position as shown in FIGS. 32 and 33, locating blade 539 is inserted into one of the winding receiving slots 59 in core 49 of core and shaft assembly 47 in its preselected rotated position on fixture 123 in its indexed position at work station 591.

If for some reason core and shaft assembly 47 was not in its preselected rotated position on fixture 123 at work station 591, locating blade 593 would, of course, abut opposite end face 57 on core 49 of the core and shaft assembly, and such abutment would cause the relative movement of drive mechanism 453d with respect to retaining means 439d thereby to actuate sensing means 467d in the manner previously discussed with respect to work station 437. Of course, upon its actuation, sensing means 467d signals the aforementioned computer (not shown) associated with apparatus 71, and the computer stores in its memory that the core and shaft assembly 47 is not in its preselected rotated position on that particular fixture 123 at work station 591.

When locating blade 593 is received in locating engagement within the winding receiving slot 59 in core 49 of core and shaft assembly 47 on fixture 123 at work station 591, as discussed above and as shown in FIGS. 32 and 33, slot 281 in enlarged head 279 on hold-down shaft 271 of the fixture is predeterminately located in axial and radial alignment with tongue 489d on drive rotor 491d of multi-motion actuator 485d. Multi-motion actuator 485d is operable to axially move drive rotor 491d into driving engagement with enlarged head 279 on hold-down shaft 271 of fixture 123 so as to insert tongue 489d on the drive rotor into slot 281 in the enlarged head. Further axial movement of drive rotor 491d axially displaces hold-down shaft 271 in platen bore 273 against the compressive force of caged spring 277 thereby to axially displace hold-down arm 275 from its previously mentioned displaced position in hold-down engagement with commutator 61 on fixture 123, as shown in FIGS. 32. Thereafter, multi-motion actuator 485d is further operable to effect a predetermined rotation of its drive rotor 491d through approximately ninety degrees (90°), and hold-down arm 275 is, of course, conjointly rotated with the drive rotor. Upon the above discussed conjoint rotation of drive rotor 491d and hold-down arm 275, multi-motion actuator 485d is operable to axially return the drive rotor to its at-rest position, as shown in FIG. 32, thereby to disengage the drive rotor from hold-down shaft 271. In response to the return movement of drive rotor 491d to its at-rest position, as discussed above, the compressive force of caged spring 277 acting on shaft 271 is effective to urge hold-down arm 275 axially downwardly into its at-rest position seated against sleeve 269 on fixture 123, as seen in FIG. 33.

Subsequent to the above discussed operations at work station 591, endless conveyor is further indexed in its predetermined course with discrete intermittent movement, as previously discussed, thereby to successively effect the conjoint indexing movement of fixture 123 from work station 591 through a dummy or idler work station 595 and then through a plurality of successive indexed positions defined within a heating work station 597, as shown schematically in FIG. 2. During the indexing movement of fixture 123 through heating work station 597, the assembled or bonded armature 45 on fixture 123 is subjected to heat created by a heat generating means, such as for instance a plurality of resistance heaters 599 or the like, with one such resistant heater being illustrated schematically in FIG. 2 and electrically connected across a power line L1, L2. Of course, the heat generated at heating station 595 cures the hardenable adhesive material in place in its adhering relation between commutator 61 and core and shaft assembly 47 of armature 45. While heating work station 595 includes the number of indexed positions for fixture 123 shown in FIG. 2, it is contemplated that a greater or lesser number of such indexed positions may be employed in a heating work station within the core of the present invention. Also, while resistance heaters 599 are illustrated in heating work station 597 merely for the purpose of disclosure, it is contemplated that other means, such as for instance an ultraviolet light source or the like, may be utilized to effect the curing of the hardenable adhesive material within the scope of the present invention.

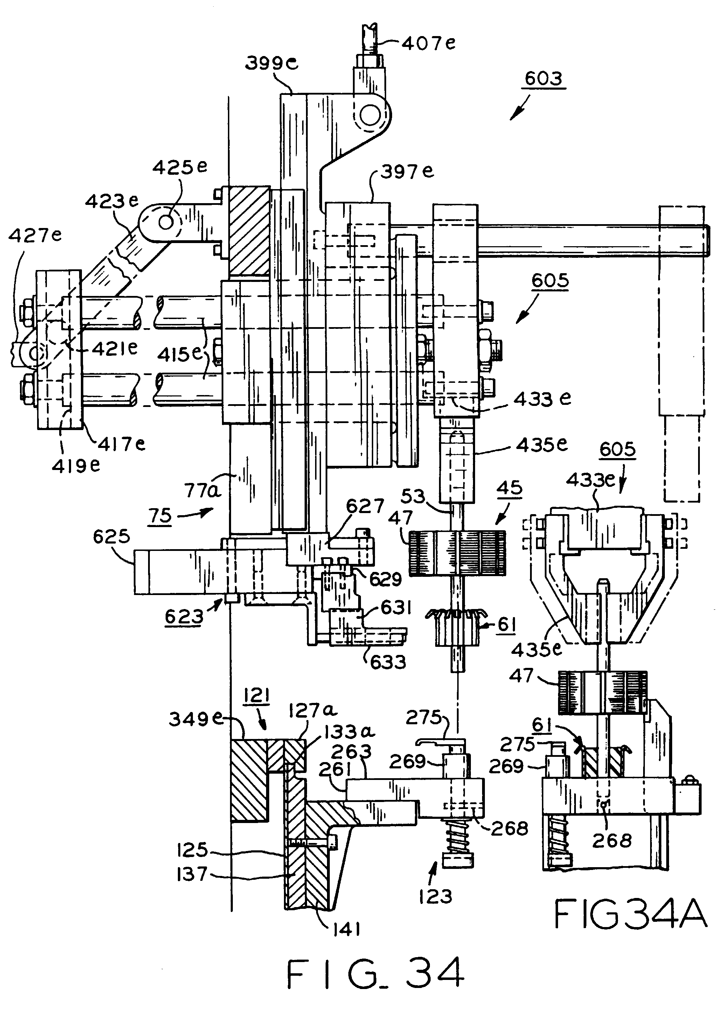

Subsequent to the above discussed operations at heating work station 597, endless conveyor 121 is further indexed in its predetermined course with discrete intermittent movement, as previously discussed, to effect successive conjoint indexing movement of fixture 123 from heating work station 597 through a dummy or idler work station 601 into a rejection work station 603, as shown schematically in FIG. 2 with rejection work station being illustrated in detail in FIGS. 34-37.

Rejection work station 603 includes another pick-and-place device 605 having generally the same component parts operably generally in the same manner as the previously described pick-and-place device 395 at work station 339 (FIG. 22); therefore, with the exceptions noted and discussed below, a description of pick-and-place device 605 is omitted for the purpose of brevity of disclosure, but the component parts of pick-and-place device 603 corresponding to those of pick-and-place device 395 are designated by the subletter "e" when referred to hereinafter.

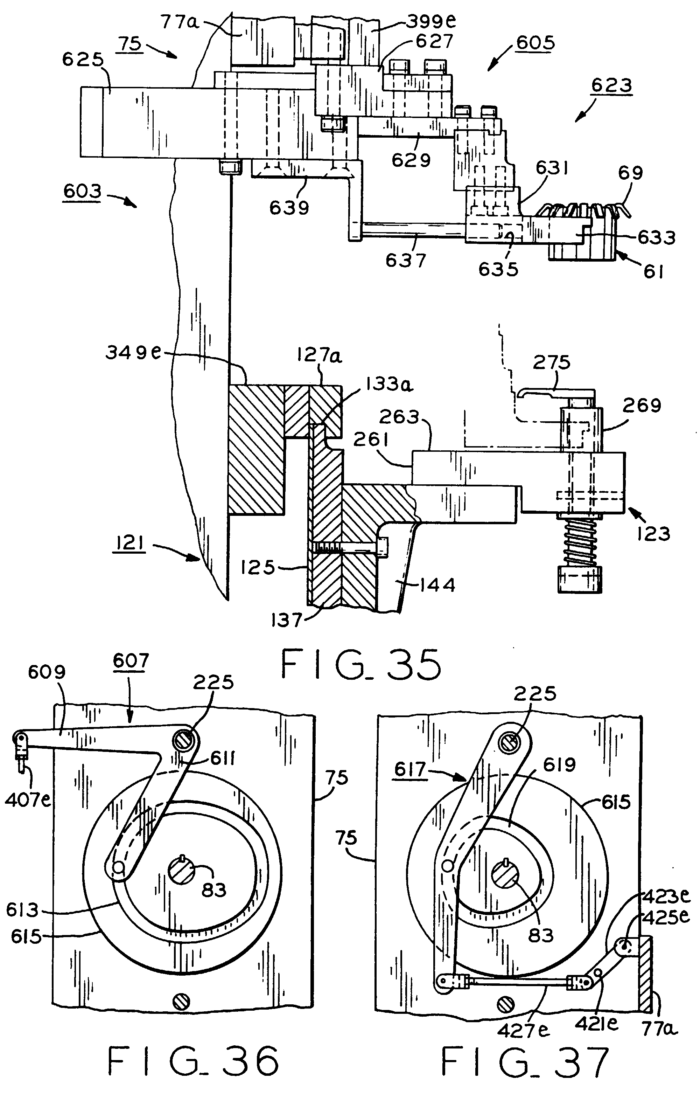

At rejection work station 603, pick-and-place device 605 is mounted to opposite side 77a of stationary frame 75 generally in the same manner that the previously described pick-and-place device 395 is mounted to opposite side 77 of the stationary frame. Bearing housing 397e is reciprocally vertically driven in slide 399c by a crank 607 which is pivotally movable about support rod 225 of stationary frame 75, as seen in FIGS. 4 and 36, and the crank has a drive arm 609 drivingly interconnected by link 407e with the bearing housing and a cam follower arm 611 associated in following relation with a cam groove 613 in one opposite face of a cam 615 fixedly secured for conjoint rotation with upper cam shaft 83 of stationary frame 75. Pivot arm 423e is pivotally connected by link 427e to a crank 617 pivotally movable about support rod 225 at stationary frame 75, as seen in FIGS. 4 and 37, and crank 617 is also associated in following relation with a cam groove 619 in the other opposite face cam 615.

In response to the cam following engagement of crank 617 with cam 615, the pivoted movement of the crank is translated through link 427e, pivot arm 423e and roller 421e onto cross-connector 417e thereby to reciprocally laterally move guide rods 415e in bearing housing 397e, and in this manner, pick-and-place device 605 is laterally moved between a leftwardly displaced position, as shown in solid lines in FIG. 34, and a rightwardly displaced position, as shown in phantom lines in FIG. 34. Furthermore, in response to the cam following engagement of crank 607 with cam 615, as seen in FIG. 36, the pivotal movement of the crank is translated through link 407e into bearing housing 397e to reciprocally vertically move it in slide 399e, and in this manner, pick-and-place device 605 on guide rods 415e carried in the bearing housing is conjointly reciprocally vertically movable therewith between a raised position, as shown in solid lines in FIG. 34, and a lower position, as discussed in greater detail hereinafter. Thus, upon the lateral movement of pick-and-place device 605 into either its leftwardly or rightwardly displaced positions, the pick-and-place device is also movable between its raised and lower positions.

As previously mentioned, the computer (not shown) associated with apparatus 71 stores in its memory each particular fixture 123 containing an improperly assembled commutator 61 or core and shaft assembly 47; therefore, for convenience of disclosure, assume that fixture 123 contains an improperly assembled armature 45 at rejection work station 603 and also that pick-and-place device 605 is in its leftwardly displaced and raised position at the rejection work station with tongs 435e open, as illustrated in phantom lines in FIG. 34A.

Upon the vertical downward movement of pick-and-place device 605 from its leftwardly displaced and raised position, shown in FIG. 34 into its leftwardly displaced and lower position, shown in FIG. 34A, air motor 435e is selectively actuated to pivotally move tongs 435e from their open positions into gripping or picking engagement with shaft extension 53 of the above assumed improperly assembled armature 45 carried on fixture 123 at rejection work station 603. While carrying the improperly assembled armature 45, pick-and-place device 605 is vertically upwardly returned from its leftwardly displaced and lower positions into its leftwardly displaced and raised positions, and the pick-and-place device is then laterally rightwardly moved from its leftwardly displaced and raised positions into its rightwardly displaced and raised positions, as shown in phantom lines in FIG. 34. From its rightwardly displaced and raised positions, pick-and-place device 605 is again vertically downwardly moved into its rightwardly displaced and lower positions, and air motor 435e of pick-and-place device 605 is selectively actuated or reactuated to pivotally open tongs 435e disengaging them from shaft extension 53 of the improperly assembled armature 45 thereto to drop it into a scrap container (not shown) located at rejection work station.

Subsequent to the above discussed disposal of the improperly assembled armature 45, pick-and-place device 605 may be sequentially returned from its rightwardly displaced and lower positions through its rightwardly displaced and raised positions into its leftwardly displaced and raised positions to await the arrival at rejection work station 603 of the next successive one of fixture 123. Of course, if a properly assembled armature 45 is carried on fixture 123 into rejection work station 603, pick-and-place device 605 would operate in the same manner as described above with the exception that air motor 435e would not be actuated to engage tongs 435e with shaft extension 53 of the properly assembled armature 45 when the pick-and-place device was in its leftwardly displaced and lower positions. Therefore, the properly assembled armature 45 on fixture 123 is indexed through rejection work station 603 as further discussed hereinafter, without being picked from the fixture by the operation of pick-and-place device 605.

As seen in FIGS. 34 and 35, pick-and-place device 605 is also provided with a commutator rejection means, indicated generally at 623, for displacing only the commutator 61 from fixture 123 at rejection work station 603, and such commutator displacement is indicated in response to the memory stored in the computer (not shown) associated with apparatus 71 that a core and shaft assembly 47 was, for some reason, not assembled with the commutator on a particular one of the fixtures.

Commutator rejection means 623 is provided with a servo motor, such as for instance a double acting air motor 625 or the like, which is flange mounted at 627 in fixed securement to the lower end portion of slide 399e for conjoint reciprocal vertical movement therewith between a raised position, as shown in solid lines in FIG. 35, and a lower position, as shown in phantom lines in FIG. 35. Air motor 625 has a laterally reciprocally movable connection or push rod 629, and a fork 631 having a pair of spaced tines 633 is fixedly secured to the connection rod for conjoint reciprocal movement therewith between a retracted or at-rest position, as seen in FIG. 34, and a protracted position, as seen in FIG. 35; however, for the sake of drawing simplification, only one of the tines 633 on fork 631 is shown in FIGS. 34 and 35. Fork 631 is also provided with a generally horizontal bore 635 which extends therethrough between tines 633, and a commutator push rod 637 slidably received in the horizontal bore is flange mounted at 639 in fixed securement to air motor 625.

If fixture 123 with only commutator 61 thereon attains its indexed position at rejection work station 603, slide 399e is conjointly vertically downwardly movable with pick-and-place device 605 from its leftwardly displaced and raised positions into its leftwardly displaced and lower positions, and commutator rejection means 623 is conjointly movable with the slide and the pick-and-place device. As pick-and-place device 605 attains its leftwardly displaced and lower positions, the computer (not shown) associated with apparatus 71 is effective to cause the selective actuation of air motor 625 moving fork 631 from its retracted position into its protracted position thereby to place tines in straddling relation with commutator 61 on fixture 123, as seen in phantom line in FIG. 35. Thereafter, in response to the return movement of pick-and-place device 605 from its leftwardly displaced and lower positions into its leftwardly displaced and raised positions, tines 633 on fork 631 engage tangs 69 on commutator 61 lifting it from fixture 123. During the aforementioned return movement of pick-and-place device 605, the computer is also effective to cause the selective actuation or reactuation of air motor 625, thereby to effect the return movement of fork 631 from its protracted position into its retracted position on push rod 637. Upon the aforementioned return movement of fork 631, bore 635 in the fork is slidable on push rod 637 thereby to engage its free end with commutator 61 supported on fork tines 633, and in response to the engagement of the push rod free end with the commutator, the commutator is ejected from the fork into the aforementioned scrap container (not shown) located at rejection work station 603. Of course, air motor 625 is not actuated when a properly assembled armature 45 is carried by fixture 123 into rejection work station 603.

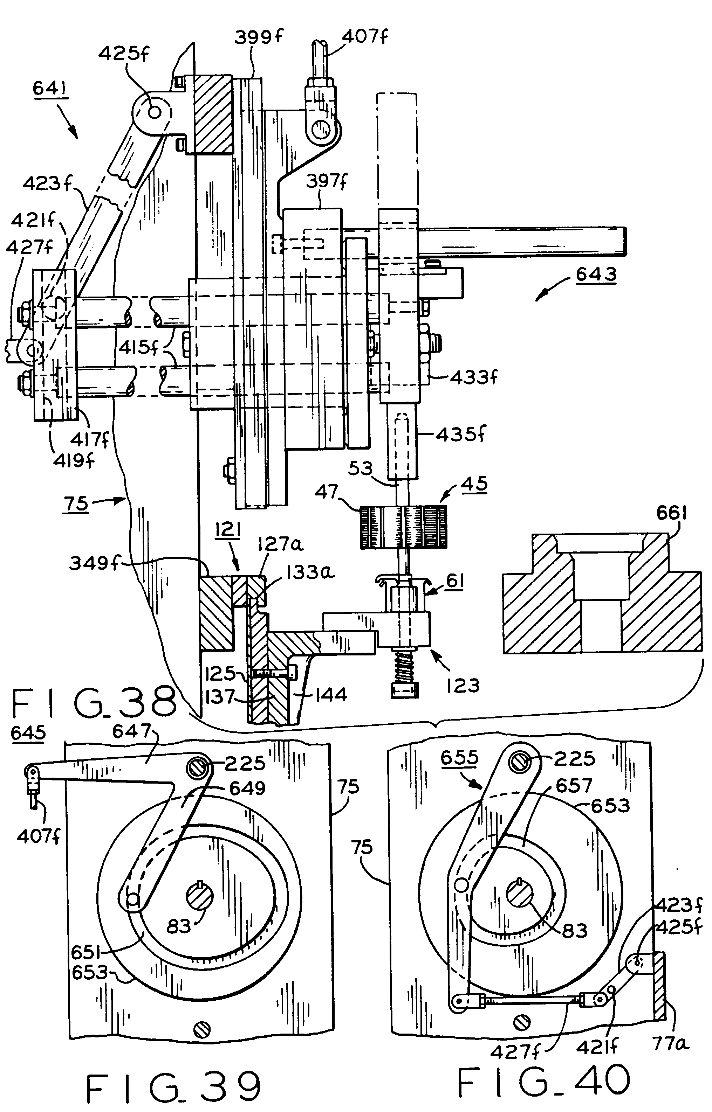

Subsequent to the above described operation at rejection work station, endless conveyor 121 is further indexed in its predetermined course with discrete intermittent movement, as previously discussed, thereby to successively effect the conjoint indexing movement of fixture 123 from rejection work station into an unloading work station 641, as shown schematically in FIGS. 2 and illustrated in detail in FIGS. 38-40. For the purpose of simplification of disclosure, assume that a properly assembled armature 45 is carried on fixture 123 into unloading work station 641.

Unloading work station 641 includes another pick-and- place device 643 having generally the same component parts operable generally in the same manner as the previously described pick-and-place device 395 at work station 339 (FIG. 22); therefore, with the exceptions discussed hereinafter, a description of pick-and-place device 643 is omitted for the purpose of brevity of disclosure, but the component parts of pick-and-place device 643 corresponding to those of pick-and- place device 395 are designated by the subletter "f" when referred to hereinafter.

At unloading work station 641, pick-and-place device 643 is mounted to opposite side 77a of stationary frame 75 generally in the same manner that the previously described pick-and-place device 395 is mounted to opposite side 77 of the stationary frame. Bearing housing 397f is reciprocally vertically driven in slide 399f by a crank 645 which is pivotally movable about support rod 225 of stationary frame 75, as seen in FIGS. 4 and 39, and the crank has a drive arm 647 drivingly interconnected by a link 407f with the bearing housing and a cam follower arm 649 associated in following relation with a cam groove 651 in one opposite face of a cam 653 fixedly secured for conjoint rotation with upper cam shaft 83 in stationary frame 75. Pivot arm 423f is pivotally connected by link 427f to a crank 655 pivotally movable about support rod 225 in stationary frame 75, as seen in FIGS. 4 and 40, and crank 655 is also associated in following relation with a cam groove 657 in the other opposite face of cam 653.

In response to the cam following engagement of crank 655 with cam 653, the pivotal movement of the crank is translated through link 427f, pivot arm 423f and roller 421f onto cross-connector 417f thereby to reciprocally laterally move guide rods 415f in bearing housing 397f, and in this manner, pick-and-place device 643 is laterally moved between a leftwardly displaced position, as shown in solid line sin FIG. 38, and a rightwardly displaced position, as shown in phantom lines in FIG. 38. Furthermore, in response to the cam following engagement of crank 645 with cam 653, as seen in FIG. 39, the pivotal movement of the crank is translated through link 407f into bearing housing 397f to reciprocally vertically move it in slide 399f, and in this manner, pick-and-place device 643 on guide rods 415f carried in the bearing housing is conjointly reciprocally vertically movable therewith between a lower position, as shown in FIG. 38, and a raised position, as shown in phantom lines in FIG. 38. Thus, upon the lateral movement of pick-and-place device 641 into either its leftwardly or rightwardly displaced positions, the pick-and-place device is also vertically movable between its raised and lower positions.

For convenience of disclosure, assume that fixture 123 contains a properly assembled armature 45 when the fixture attains its indexed position at unloading work station 641 and also assume that pick-and-place device 643 is in its leftwardly displaced and raised position with tongs 435f open. Upon the vertical downward movement of pick-and-place device 643 from its leftwardly displaced and raised positions into its leftwardly displaced and lower positions, as seen in FIG. 38, air motor 433f is selectively actuated to move tongs 435f into gripping or picking engagement with shaft extension 53 of the properly assembled armature 45 carried on fixture 123 at unloading work station 641. While carrying the properly assembled armature 45, pick-and-place device 643 is vertically upwardly returned from its leftwardly displaced and lower positions into its leftwardly displaced and raised positions, and the pick-and-place device is then laterally rightwardly moved from its leftwardly displaced and raised positions into its rightwardly displaced and raised positions, as shown in phantom lines in FIG. 38. From its rightwardly displaced and raised positions, pick-and-place device 643 is again moved vertically downwardly into its rightwardly displaced and lower position thereby to place or deposit the properly assembled armature 45 in a pallet 661 of another conveyor (not shown) associated with apparatus 71 at unloading work station 641. Upon the disposition of the properly assembled armature 45 in pallet 661, air motor 435f of pick-and-place device 643 is selectively actuated or reactuated to pivotally open tongs 435f disengaging them from shaft extension 53 of the properly assembled armature 45, and the pick-and-place device may be sequentially returned from its rightwardly displaced and lowered positions through its rightwardly displaced and raised positions into its leftwardly displaced and raised positions thereby to await the arrival at unloading work station 641 of successive ones of fixtures 123 respectively having a properly assembled armature 45 thereon.

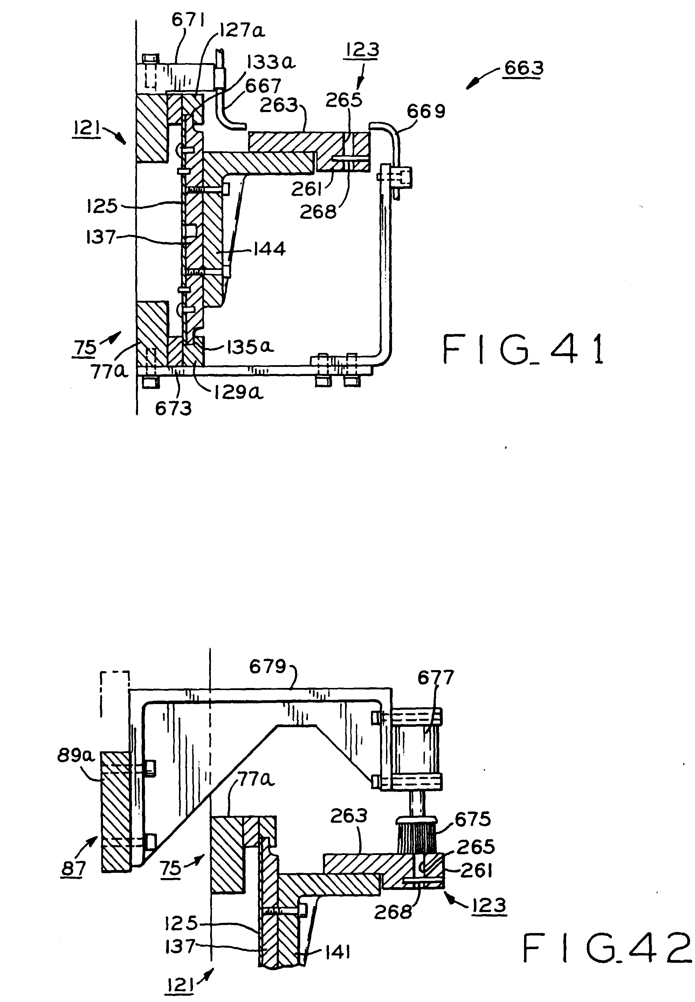

Subsequent to the above discussed operations at unloading work station 641, endless conveyor 121 is further indexed in its predetermined course with discrete intermittent movement, as previously discussed, to effect successive conjoint movement of fixture 123 from unloading work station 641 successively into a sensing station 663 and fixture cleansing station 665, as shown schematically in FIG. 2 and as respectively illustrated in FIGS. 41 and 42.

At sensing station 663, a set of sensing means 667, 669, such as for instance photo-electric sensors or the like, are flange mounted at 671, 673 in fixed securement to opposite side 77a of stationary member, and the sensing means are respectively predeterminately positioned with respect to each other. Thus, when fixture 123 attains its indexed position at sensing station 663, sensing means 667, 669 are operable to sense the presence of an armature 45 or component parts thereof on the fixture or the absence of such armature or component parts from the fixture. If for some reason an armature 45 or a component part thereof, i.e. an armature 61 or core and shaft assembly 47, is present on fixture 123, it will interrupt the communication between sensing means 667, 669, and the sensing means will signal the computer (not shown) associated with apparatus 71. In response to this signal from sensing means 667, 669, the computer would stop the operation of apparatus 71 by interrupting the power supply to electric motor 111, shown in FIGS. 3 and 4, and an operator would have to manually remove the aforementioned armature 45 or component part thereof remaining on fixture 123 at sensing station 663 before apparatus 71 could be restarted.

At cleansing work station 665, a brush 675 is continuously rotatably driven by an electric motor 677 which is flange mounted at 679 in fixed securement to opposite side member 89a of movable frame 87 for conjoint vertical movement with the movable frame between its raised position, as shown in phantom line sin FIG. 42, and its lowered position, as shown in solid lines in FIG. 42. When fixture 123 attains its indexed position at cleansing work station 665, movable frame 87 is moved vertically downwardly from its raised position into its lowered position thereby to conjointly move brush 675 into brushing engagement with upper face 263 on platen 261 of fixture 123 generally about platen bore 265. Of course, any foreign particles or contaminating material which may have collected on upper face 263 of platen 261 about platen bore 265 is at least in part removed therefrom in response to the brushing action of brush 275. Upon the return or upward vertical movement of movable frame from its lowered position into its raised position, brush 675 is disengaged from fixture 123.

To complete the description of apparatus 71 and its operation, fixture 121 is further indexed from cleansing work station 665 through a plurality of return or idler work stations, as schematically shown in FIG. 2 and indicated generally at 681, in the predetermined course of endless conveyor means thereby to be returned to work station 183 to commence another successive cycle or indexing movements through the predetermined course of the endless conveyor.

## Claims

1. A method of assembling an armature (45) for use in a dynamoelectric machine, the armature including a commutator (61) having a bore (65) therethrough, and a core and shaft assembly (47) with a core (49) secured about a shaft (51) intermediate a pair of generally axial opposite shaft extensions (53,53a), a hardenable adhesive material, and an activator for the hardenable adhesive material, the method comprising the steps of:
coating at least a part of the commutator bore (65) with the activator and locating the commutator (61) in a preselected stationary position;
axially aligning one of the opposite shaft extensions (53) with the commutator bore (65) when the commutator (61) is in its preselected stationary position and then applying the hardenable adhesive material generally about a preselected part of the one opposite shaft extension (53);
disposing the preselected part of the one opposite shaft extension (53) at least in part within the commutator bore (65) when the commutator (61) is located in its preselected stationary position thereby to communicate the hardenable adhesive material with the activator and to arrange the core (49) and the commutator (61) in preselected axially spaced relation; and
rotating only the core (49) and shaft assembly (47) to arrange the core (49) in a preselected rotated position with respect to the commutator (61) in its pre-selected stationary position and ensuring the mixing of the activator and the hardenable adhesive material communicated during the disposing step in response to the rotating step.

2. The method as set forth in claim 1 further comprising the additional subsequent step of hardening the hardenable adhesive material in adhering relation between the one opposite shaft extension (53,53a) and the commutator (65).

3. The method as set forth in claim 1 wherein the rotating step includes rotatably moving the core (49) away from its preselected rotated position and rotatably returning the core (49) into its preselected rotated position.

4. The method as set forth in claim 3 further comprising the intermediate step of releasably retaining the core (49) in its preselected rotated position prior to the steps of claim 3.

5. The method as set forth in claim 4 further comprising the further intermediate steps of releasing the retention of the core (49) prior to the rotatably moving step and reestablishing the releasable retention of the core (49) subsequent to the rotatably returning step.

6. The method as set forth in claim 1 wherein the core (49) has a plurality of generally radially spaced winding receiving slots (59) and the commutator (61) has a plurality of generally radially spaced winding connection tangs (69) equal in number to the winding receiving slots (59), and wherein the rotating step includes axially aligning the winding receiving slots (59) with the winding connection tangs (69) when the core (49) is in its rotated position and the commutator (61) is in its preselected stationary position.

7. The method as set forth in claim 6 further comprising the preliminary step of deforming at least some of the winding connection tangs (69) to ensure the radial spacing thereof.

8. A method of assembling an armature (45) for use in a dynamoelectric machine, the armature including a commutator (61) having a generally axial bore (65) therethrough, and a core and shaft assembly (47) having a core (49) secured about a shaft (51) intermediate a pair of generally opposite shaft extensions (53,53a), a hardenable adhesive material, and an activator for the hardenable adhesive material, the method comprising the steps of:
coating at least a part of the commutator bore (65) with the activator and disposing the commutator (61) in a preselected stationary position;
inserting one of the opposite shaft extensions (53,53a) in part generally axially through the commutator bore (65) and rotating the core and shaft assembly (47) into a preselected rotated position with respect to the commutator (61) in its preselected stationary position;
removing the shaft from the bore of the commutator and applying the hardenable adhesive material generally about a preselected part on the one opposite shaft extension (53) and axially moving the preselected part on the one opposite shaft extension (53) at least in part within the commutator bore (65);
further rotating the core and shaft assembly (47) from its preselected rotated position when the preselected part on the one opposite shaft extension (53) is at least in part within the commutator bore (65) and returning the core and shaft assembly (47) into its preselected rotated position with respect to the commutator (61) in its preselected stationary position; and
ensuring the mixing of the activator and the hardenable adhesive material effected during the axially moving step in response to the further rotating and return rotating steps.

9. The method as set forth in claim 8 further comprising the subsequent additional step of hardening the hardenable adhesive material in adhering relation between the one opposite shaft extension (53) and the commutator bore (65).

10. The method as set forth in claim 8 wherein the core (49) has a plurality of generally radially spaced winding receiving slots (59) and the commutator (61) has a plurality of generally radially spaced winding . connection tangs (69), and wherein the rotating step includes axially aligning the winding receiving slots (59) when the core and shaft assembly (47) is in its preselected rotated position with the winding connection tangs (69) on the commutator (61) in its preselected stationary position.

11. The method as set forth in claim 8 further comprising the intermediate step of locking the commutator (61) in its preselected stationary position immediately after it has been disposed in its predetermined position.

12. The method as set forth in claim 8 further comprising the intermediate step of releasably retaining the core and shaft assembly (47) in its preselected rotated position attained during the rotating step.

13. The method as set forth in claim 12 further comprising the further intermediate steps of releasing the retention of the core and shaft assembly (47) prior to the further rotating step and reestablishing the releasable retention of the core and shaft assembly (47) subsequent to the returning step.

14. The method as set forth in claim 8 wherein the axially moving step includes lowering the preselected part on the one opposite shaft extension (53) to place it at least in part within the commutator bore (65).

15. The method as set forth in claim 8 wherein the axially moving step includes arranging the core (49) in preselected axially spaced relation with the commutator (61) in its preselected stationary position upon the axial movement of the preselected part on the one opposite shaft extension (53) at least in part within the commutator bore (65).

## Patentansprüche

1. Verfahren zum Zusammenbauen eines Ankers (45) zur Verwendung in einer dynamoelektrischen Maschine, wobei der Anker (45) einen Kommutator (61) mit einer hindurchführenden Bohrung (65) und eine Kern- und Wellenanordnung (47), deren Kern (49) um eine Welle (51) zwischen zwei im allgemeinen axial gegenüberliegenden Wellenverlängerungen (53, 53a) befestigt ist, ein härtbares Klebematerial und einen Aktivator für das härtbare Klebematerial aufweist, wobei das Verfahren die Schritte umfaßt:
Überziehen wenigstens eines Teils der Kommutatorbohrung (65) mit dem Aktivator und Anordnen des Kommutators (61) in einer vorgewählten stationären Position;
axiales Ausrichten von einer der gegenüberliegenden Wellenverlängerungen (53) mit der Kommutatorbohrung (65), wenn der Kommutator (61) in seiner vorgewählten stationären Position ist, und dann Aufbringen des härtbaren Klebematerials im allgemeinen um einen vorgewählten Teil von der einen gegenüberliegenden Wellenverlängerungen (53);
Anordnen des vorgewählten Teils von der einen gegenüberliegenden Wellenverlängerung (53) wenigstens teilweise innerhalb der Kommutatorbohrung (65), wenn der Kommutator (61) in seiner vorgewählten stationären Position angeordnet ist, um dadurch das härtbare Klebematerial mit dem Aktivator in Verbindung zu bringen und den Kern (49) und den Kommutator (61) in einer vorgewählten axialen Abstandsrelation anzuordnen, und
Drehen nur der Kern(49)- und Wellenanordnung (47), um den Kern (49) in einer vorgewähltne gedrehten Position in Bezug auf den Kommutator (61) in seiner vorgewählten stationären Position anzuordnen, und Sicherstellen des Mischens des Aktivators und des härtbaren Klebematerials, die während des Anordnungsschrittes bei dem Drehschritt in Verbindung gebracht wurden.

2. Verfahren nach Anspruch 1, ferner den zusätzlichen, nachfolgenden Schritt enthaltend, daß das härtbare Klebematerial in einer anhaftenden Relation zwischen der einen gegenüberliegenden Wellenverlängerung (53, 53a) und dem Kommutator (61) gehärtet wird.

3. Verfahren nach Anspruch 1, wobei der Drehschritt enthält, daß der Kern (49) aus seiner vorgewählten gedrehten Position drehend wegbewegt wird und der Kern (49) drehend in seine vorgewählte gedrehte Position zurückbewegt wird.

4. Verfahren nach Anspruch 3, ferner den Zwischenschritt enthaltend, daß der Kern (49) vor den Schritten gemäß Anspruch 3 in seiner vorgewählten gedrehten Position lösbar festgehalten wird.

5. Verfahren nach Anspruch 4, ferner die Zwischenschritte enthaltend, daß die Halterung des Kerns (49) vor dem drehenden Bewegungsschritt gelöst wird und die lösbare Halterung des Kerns (49) wiederhergestellt wird, nachdem er drehend in seine vorgewählte gedrehte Position zurückgebracht ist.

6. Verfahren nach Anspruch 1, wobei der Kern (49) mehrere im allgemeinen radial beabstandete Wickelungsaufnahmenuten (59) hat und der Kommutator (61) mehrere im allgemeinen radial beabstandete Wickelungsverbindungslappen (69) hat, deren Zahl gleich den Wickelungsaufnahmenuten (59) ist, und wobei der Drehschritt enthält, daß die Wickelungsaufnahmenuten (59) mit den Wickelungsverbindungslappen (69) axial ausgerichtet werden, wenn der Kern (49) in seiner gedrehten Position und der Kommutator (61) in seiner vorgewählten stationären Position ist.

7. Verfahren nach Anspruch 6, wobei ferner der vorläufige Schritt vorgesehen ist, daß wenigstens einige der Wickelungsverbindungslappen (69) verformt werden, um ihren radialen Abstand sicherzustellen.

8. Verfahren zum Zusammenbauen eines Ankers (45) zur Verwendung in einer dynamoelektrischen Maschine, wobei der Anker (45) einen Kommutator (61) mit einer hindurchführenden im allgemeinen axialen Bohrung (65) und eine Kern- und Wellenanordnung (47), deren Kern (49) um eine Welle (51) zwischen zwei im allgemeinen gegenüberliegenden Wellenverlängerungen (53, 53a) befestigt ist, ein härtbares Klebematerial und einen Aktivator für das härtbare Klebematerial aufweist, wobei das Verfahren die Schritte enthält:
Überziehen wenigstens eines Teils der Kommutatorbohrung (65) mit dem Aktivator und Anordnen des Kommutators (61) in einer vorgewählten stationären Position;
Einsetzen von einer der gegenüberliegenden Wellenverlängerungen (53, 53a) teilweise im allgemeinen axial durch die Kommutatorbohrung (65) und Drehen der Kern- und Wellenanordnung (47) in eine vorgewählte gedrehte Position in bezug auf den Kommutator (61) in seiner vorgewählten stationären Position;
Herausnehmen der Welle (51) aus der Bohrung (65) des Kommutators und Aufbringen des härtbaren Klebematerials im allgemeinen um einen vorgewählten Teil auf der einen gegenüberliegenden Wellenverlängerung (53) und axiales Bewegen des vorgewählten Teils auf der einen gegenüberliegenden Wellenverlängerung (53) wenigstens teilweise innerhalb der Kommutatorbohrung (65) ;
weiteres Drehen der Kern- und Wellenanordnung (47) aus ihrer vorgewählten gedrehten Position, wenn der vorgewählte Teil auf der einen gegenüberliegenden Wellenverlängerung (53) wenigstens teilweise in der Kommutatorbohrung (65) ist, und Zurückbringen der Kern- und Wellenanordnung (47) in ihre vorgewählte gedrehte Position in bezug auf den Kommutator (61) in seiner vorgewählten stationären Position; und
Sicherstellen des Mischens des Aktivators und des härtbaren Klebematerials, das während des axialen Bewegungsschrittes als Antwort auf die weiteren Dreh- und Rückdrehschritte herbeigeführt ist.

9. Verfahren nach Anspruch 8, wobei ferner der nachfolgende zusätzliche Schritt vorgesehen ist, daß das härtbare Klebematerial in einer anhaftenden Relation zwischen der einen gegenüberliegenden Wellenverlängerung (53) und der Kommutatorbohrung (65) gehärtet wird.

10. Verfahren nach Anspruch 8, wobei der Kern (49) mehrere im allgemeinen radial beabstandete Wickelungsaufnahmenuten (59) hat und der Kommutator (61) mehrere im allgemeinen radial beabstandete Wickelungsverbindungslappen (69) hat und wobei der Drehschritt enthält, daß die Wickelungsaufnahmenuten (59) axial ausgerichtet werden, wenn die Kern- und Wellenanordnung (47) in ihrer vorgewählten gedrehten Position ist, wobei die Wickelungsverbindungslappen (69) auf dem Kommutator (61) in ihrer vorgewählten stationären Position sind.

11. Verfahren nach Anspruch 8, ferner den Zwischenschritt enthaltend, daß der Kommutator (61) in seiner vorgewählten stationären Position verriegelt wird, unmittelbar nachdem er in seiner vorbestimmten Position angeordnet worden ist.

12. Verfahren nach Anspruch 8, wobei ferner der Zwischenschritt vorgesehen ist, daß die Kern- und Wellenanordnung (47) in ihrer vorgewählten gedrehten Position lösbar gehaltert wird, die sie während des Drehschrittes erreicht hat.

13. Verfahren nach Anspruch 12, ferner die Zwischenschritte enthaltend, daß die Halterung der Kern- und Wellenanordnung (47) vor dem weiteren Drehschritt gelöst wird und die lösbare Halterung der Kern- und Wellenanordnung (47) nach dem Rückkehrschritt wiederhergestellt wird.

14. Verfahren nach Anspruch 8, wobei der axiale Bewegungsschritt enthält, daß der vorgewählte Teil auf der wenigstens einen gegenüberliegenden Wellenverlängerung (53) abgesenkt wird, um ihn wenigstens teilweise in der Kommutatorbohrung (65) anzuordnen.

15. Verfahren nach Anspruch 8, wobei der axiale Bewegungsschritt enthält, daß der Kern (49) in einer vorgewählten axialen Abstandsrelation zu dem Kommutator (61) in seiner vorgewählten stationären Position angeordnet wird nach der axialen Bewegung des vorgewählten Teils auf der einen gegenüberliegenden Wellenverlängerung (53) wenigstens teilweise in der Kommutatorbohrung (65).

## Revendications

1. Procédé d'assemblage d'un rotor (45) à utiliser dans une machine dynamo-électrique, le rotor comprenant un collecteur (61) traversé par un alésage (65) et un ensemble noyau et arbre (47), le noyau (49) étant fixé autour d'un arbre (51) entre une paire de bouts d'arbre (53, 53a) opposés et globalement axiaux, un matériau adhésif pouvant durcir et un activateur du matériau adhésif pouvant durcir, le procédé comprenant les étapes consistant à :
- recouvrir une partie au moins de l'alésage (65) du collecteur avec l'activateur et placer le collecteur (61) en une position fixe présélectionnée,
- aligner axialement l'un (53) des bouts d'arbre opposés avec l'alésage (65) du collecteur alors que le collecteur est dans sa position fixe présélectionnée, puis appliquer le matériau adhésif pouvant durcir généralement autour d'une partie présélectionnée du premier (53) des bouts d'arbre opposés,
- disposer la partie présélectionnée du premier (53) des bouts d'arbre opposés au moins partiellement dans l'alésage (65) du collecteur alors que le collecteur est dans sa position fixe présélectionnée pour mettre ainsi en contact le matériau adhésif pouvant durcir et l'activateur et pour disposer le noyau (49) et le collecteur (61) dans une relation d'espacement axial présélectionnée, et
- faire tourner seul l'ensemble d'arbre (47) et de noyau (49) pour disposer le noyau (49) dans une position de rotation présélectionnée par rapport au collecteur (61) se trouvant dans sa position fixe présélectionnée et garantir, en réponse à l'étape de rotation, le mélange de l'activateur et du matériau adhésif pouvant durcir mis en contact pendant l'étape de mise en place.

2. Procédé selon la revendication 1, comprenant en outre l'étape supplémentaire ultérieure de durcissement du matériau adhésif pouvant durcir en relation d'adhérence entre le premier bout d'arbre (53, 53a) et le collecteur (65).

3. Procédé selon la revendication 1, dans lequel l'étape de rotation comprend le fait de faire tourner le noyau (49) en l'éloignant de sa position de rotation présélectionnée et de ramener le noyau (49) par rotation en sa position de rotation présélectionnée.

4. Procédé selon la revendication 3, comprenant en outre l'étape intermédiaire consistant à retenir de façon libérable le noyau (49) dans sa position de rotation présélectionnée avant les étapes de la revendication 3.

5. Procédé selon la revendication 4, comprenant en outre les autres étapes intermédiaires consistant à supprimer la retenue du noyau (49) avant l'étape de rotation et à rétablir la retenue libérable du noyau (49) après l'étape de retour en place par rotation.

6. Procédé selon la revendication 1, dans lequel le noyau (49) comporte une pluralité d'encoches (59) de réception d'enroulement, globalement espacées dans le sens radial, et le collecteur (61) comporte une pluralité de languettes (69) de connexion d'enroulement, globalement espacées dans le sens radial, en nombre égal à celui des encoches (59) de réception d'enroulement, et dans lequel l'étape de rotation comprend le fait d'aligner axialement les encoches (59) de réception d'enroulement et les languettes (69) de connexion d'enroulement alors que le noyau (49) est dans sa position de rotation et le collecteur (61) dans sa position fixe présélectionnée.

7. Procédé selon la revendication 6, comprenant en outre l'étape préliminaire consistant à déformer certaines au moins des languettes (69) de connexion d'enroulement pour garantir leur espacement radial.

8. Procédé d'assemblage d'un rotor (45) à utiliser dans une machine dynamo-électrique, le rotor comprenant un collecteur (61) traversé par un alésage (65) globalement axial et un ensemble noyau et arbre (47) qui comprend un noyau (49) fixé autour d'un arbre (51) entre une paire de bouts d'arbre (53, 53a) globalement opposés, un matériau adhésif pouvant durcir et un activateur du matériau adhésif pouvant durcir, le procédé comprenant les étapes consistant à :
- recouvrir une partie au moins de l'alésage (65) du collecteur avec l'activateur et placer le collecteur (61) dans une position fixe présélectionnée,
- introduire en partie l'un des bouts d'arbre opposés (53, 53a), de manière globalement axiale dans l'alésage (65) du collecteur et faire tourner l'ensemble noyau-arbre (47) pour l'amener dans une position présélectionnée de rotation par rapport au collecteur (61) se trouvant dans sa position fixe présélectionnée,
- retirer l'arbre de l'alésage du collecteur et appliquer le matériau adhésif pouvant durcir généralement autour d'une partie sélectionnée du premier (53) des bouts d'arbre opposés, puis déplacer axialement la partie sélectionnée sur le premier bout d'arbre (53) au moins partiellement à l'intérieur de l'alésage (65) du collecteur,
- faire tourner encore l'ensemble noyau-arbre (47) de sa position présélectionnée de rotation alors que la partie présélectionnée du premier bout d'arbre (53) est au moins partiellement à l'intérieur de l'alésage (65) du collecteur et ramener l'ensemble noyau-arbre (47) à sa position présélectionnée de rotation par rapport au collecteur (61) se trouvant dans sa position fixe présélectionnée, et
- assurer, en réponse aux étapes de rotation supplémentaire et de rotation de retour, le mélange de l'activateur et du matériau adhésif pouvant durcir effectué pendant l'étape de déplacement axial.

9. Procédé selon la revendication 8, comprenant en outre l'étape supplémentaire ultérieure de durcissement du matériau adhésif pouvant durcir en relation d'adhérence entre le premier bout d'arbre (53) et l'alésage (65) du collecteur.

10. Procédé selon la revendication 8, dans lequel le noyau (49) comporte une pluralité d'encoches (59) de réception d'enroulement, globalement espacées dans le sens radial, et le collecteur (61) comporte une pluralité de languettes (69) de connexion d'enroulement, globalement espacées dans le sens radial, et dans lequel l'étape de rotation comprend le fait d'aligner axialement les encoches (59) de réception d'enroulement, lorsque l'ensemble noyau-arbre (47) est dans sa position présélectionnée de rotation, avec les languettes (69) de connexion d'enroulement se trouvant sur le collecteur (61) dans sa position fixe présélectionnée.

11. Procédé selon la revendication 8, comprenant en outre l'étape intermédiaire de blocage du collecteur (61) dans sa position fixe présélectionnée immédiatement après qu'il a été placé dans sa position prédéterminée.

12. Procédé selon la revendication 8, comprenant en outre l'étape intermédiaire de retenue libérable de l'ensemble noyau-arbre (47) dans sa position présélectionnée de rotation atteinte pendant ladite étape de rotation.

13. Procédé selon la revendication 12, comprenant en outre les autres étapes intermédiaires consistant à supprimer la retenue de l'ensemble noyau-arbre (47) avant l'étape de rotation supplémentaire et à rétablir la retenue libérable de l'ensemble noyau-arbre (47) après l'étape de retour à la position présélectionnée de rotation.

14. Procédé selon la revendication 8, dans lequel l'étape de déplacement axial comprend le fait de faire descendre la partie présélectionnée sur le bout d'arbre (53) pour la placer au moins partiellement à l'intérieur de l'alésage (65) du collecteur.

15. Procédé selon la revendication 8, dans lequel l'étape de déplacement axial comprend le fait de placer le noyau (49) en relation présélectionnée d'espacement axial par rapport au collecteur (61) se trouvant dans sa position fixe présélectionnée lors du déplacement axial de la partie présélectionnée sur le bout d'arbre (53) au moins partiellement à l'intérieur de l'alésage (65) du collecteur.
